# EUROPÄISCHE PATENTSCHRIFT

(11) **EP 3 489 634 B1**
(45) Veröffentlichungstag und Bekanntmachung des Hinweises auf die Patenterteilung: **05.08.2020**
(21) Anmeldenummer: 18199945.9
(22) Anmeldetag: 11.10.2018
(51) Int. Cl.: G01F 1/66

(54) **ULTRASCHALL-MESSVORRICHTUNG UND VERFAHREN ZUR ULTRASCHALLMESSUNG AN EINEM STRÖMENDEN FLUID**
ULTRASONIC MEASURING DEVICE AND METHOD FOR THE ULTRASONIC MEASUREMENT OF A FLOWING FLUID
DISPOSITIF DE MESURE PAR ULTRASONS ET PROCÉDÉ DE MESURE PAR ULTRASONS SUR UN FLUIDE S'ÉCOULANT

(30) Priorität: 22.11.2017 EP 17203028
(43) Veröffentlichungstag der Anmeldung: 29.05.2019
(73) Patentinhaber: Levitronix GmbH, 8005 Zürich (CH)
(72) Erfinder: Schöb, Reto Dr., 8806 Bäch SZ (CH); Barletta, Natale Dr., 8048 Zürich (CH)
(74) Vertreter: Intellectual Property Services GmbH

(56) Entgegenhaltungen:
- EP-A1- 2 604 982
- WO-A1-95/17650
- WO-A1-2016/144585
- JP-B1- 4 991 972
- US-A- 3 738 169
- US-A1- 2004 254 469
- US-A1- 2008 236 297
- US-A1- 2011 271 769

## Beschreibung

Die Erfindung betrifft eine Ultraschall-Messvorrichtung zur Messung an einem in einer Leitung strömenden Fluid sowie ein Verfahren zur Ultraschallmessung an einem in einer Leitung strömenden Fluid.

Ultraschall-Messvorrichtungen zur Messung an einem in einer Leitung strömenden Fluid werden beispielsweise eingesetzt, um den Durchfluss des Fluids durch eine Leitung, beispielsweise einen flexiblen Kunststoffschlauch zu bestimmen. Dabei ist es eine bekannte Massnahme, die Messvorrichtung als Klemmvorrichtung auszugestalten, derart dass sie auf eine flexible Leitung aufgeklemmt werden kann, bzw. dass die Leitung von der Messvorrichtung eingeklemmt wird. Die Leitung mit dem darin strömenden Fluid wird dann mit Ultraschallsignalen beaufschlagt. Nach Durchlaufen der Leitung und des Fluids werden die Ultraschallsignale von einem Ultraschallwandler empfangen und das empfangene Signal ausgewertet. Solche Ultraschall-Messvorrichtungen sind zum Beispiel in US 2008/236297 A1 und in JP 4 99 1972 P1 offenbart.

Diese nicht invasive Methode der Messung an einem strömenden Fluid wird insbesondere bei solchen hochreinen oder sehr empfindlichen Fluiden verwendet, bei denen ein Kontakt zwischen dem Fluid und der Messvorrichtung vermieden werden soll, beispielsweise, damit das Fluid nicht kontaminiert wird. Als Beispiele seien hier die Pharmaindustrie und die biotechnologische Industrie genannt. Hier werden häufig Lösungen und Suspensionen hergestellt und gefördert, die eine sehr hohe Anforderung an die Reinheit und/oder an die Unversehrtheit des Fluids stellen. Häufig müssen derartige Fluide sogar unter sterilen Bedingungen behandelt werden.

Eine derartige Ultraschall-Messvorichtung, die insbesondere für die nicht invasive Messung an hochreinen Substanzen geeignet ist, ist der als Klemmvorrichtung ausgestaltete Flussmesser, welcher von der Anmelderin unter dem Handelsnamen LEVIFLOW angeboten und vertrieben wird. Diese Ultraschallmessvorrichtung hat zwei Gehäuseteile die gelenkig miteinander verbunden sind. Im geöffneten Zustand wird die flexible Leitung, an welcher gemessen werden soll, in das Gehäuse eingelegt. Anschliessend werden die beiden Gehäuseteile zusammengeklappt und aneinander fixiert, sodass die flexible Leitung durch eine Klemmverbindung in dem Gehäuse fixiert ist. In dem Gehäuse sind zwei Ultraschallwandler vorgesehen, von denen jeder ein Ultraschallsignal aussenden und empfangen kann. Dabei ist ein erster Ultraschallwandler auf der einen Seite der eingeklemmten Leitung angeordnet und ein zweiter Ultraschallwandler auf der anderen Seite der Leitung.

Die beiden Ultraschallwandler sind bezüglich der Strömungsrichtung des Fluids zueinander versetzt angeordnet und dabei so ausgerichtet, dass der erste Ultraschallwandler ein von dem zweiten Ultraschallwandler gesendets Signal empfangen kann, und der zweite Ultraschallwandler ein von dem ersten Ultraschallwandler gesendetes Signal empfangen kann. Durch den Versatz zueinander sind dabei die beiden Ultraschallwandler so ausgerichtet, dass sie ihre Ultraschallsignale jeweils schräg zur Strömungsrichtung des Fluids aussenden, wobei der eine Ultraschallwandler das Signal schräg mit der Strömungsrichtung aussendet, während der andere Ultraschallwandler das Signal schräg gegen die Strömungsrichtung aussendet. Nun wird mit dem ersten Ultraschallwandler ein Messsignal ausgesendet, das von dem zweiten Ultraschallwandler empfangen wird, und dann wird von dem zweiten Ultraschallwandler ein Messsignal ausgesendet, das von dem ersten Ultraschallwandler ausgesendet wird.

Das schräg in Strömungsrichtung ausgesendete Messsignal wird in der Strömung beschleunigt und das schräg gegen die Strömungsrichtung ausgesendete Messignal wird durch die Strömung abgebremst. Die Laufzeitdifferenz der beiden Messsignale ist proportional zur Strömungsgeschwindigkeit des Fluids, sodass sich aus dieser Laufzeitdifferenz der Durchfluss durch die flexible Leitung ermittelm lässt.

Diese Art von Ultraschall-Messvorrichtungen hat sich in der Praxis sehr gut bewährt. Dennoch gibt es im Hinblick auf immer höhere Anforderungen, beispielsweise an die Messgenauigkeit oder an die Flexibilität der Messvorrichtung, noch Verbesserungspotential. Beispielsweise sollte der Einfluss der spezifischen Leitung, an welcher gemessen wird, besser berücksichtigt werden können. Zwar sind die üblicherweise verwendeten Leitungen, z. B. Kunststoffschläuche, bezüglich ihrer nominellen Abmessungen (z. B. Wandstärke, Durchmesser) oder bezüglich des Materials bekannt, aber es kann dennoch immer wieder zu Abweichungen zwischen individuellen Schläuchen kommen, die sich auf die Ultraschallmessung störend auswirken können, bzw. deren Genauigkeit begrenzen.

Auch wäre es wünschenswert, insbesondere bei einer Prozessüberwachung, wenn Änderungen in dem Fluid, beispielsweise eine Änderung der Konzentration einer Komponente des Fluids, erkennbar sind.

Diesen Aufgaben widmet sich die vorliegende Erfindung.

Ausgehend von diesem Stand der Technik ist es daher eine Aufgabe der Erfindung, eine Ultraschall-Messvorrichtung zur Messung an einem in einer Leitung strömenden Fluid vorzuschlagen, welche eine sehr genaue Ermittlung von Kenngrössen ermöglicht, die von der Schallausbreitung in dem Fluid abhängig sind. Ferner ist es eine Aufgabe der Erfindung ein entsprechendes Verfahren zur Ultraschallmessung an einem in einer Leitung strömenden Fluid vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also eine Ultraschall-Messvorrichtung vorgeschlagen zur Messung an einem in einer Leitung strömenden Fluid, mit einem schliessbaren Gehäuse, welches eine durchgängige zentrale Ausnehmung aufweist, die eine Längserstreckung hat, welche eine Strömungsrichtung festlegt, wobei das Gehäuse derart zur lösbaren Befestigung an der Leitung ausgestaltet ist, dass im geschlossenen Zustand des Gehäuses die zentrale Ausnehmung die Leitung aufnehmen und bezüglich des Gehäuses fixieren kann, sodass das Fluid die zentrale Ausnehmung in der Strömungsrichtung durchströmen kann, wobei im Gehäuse ferner mindestens vier Ultraschallwandler zum jeweiligen Aussenden und Empfangen von Ultraschallsignalen vorgesehen sind, nämlich mindestens zwei erste Ultraschallwandler, welche im geschlossenen Zustand des Gehäuses lateral auf einer ersten Seite der zentralen Ausnehmung angeordnet sind, und mindestens zwei zweite Ultraschallwandler, welche im geschlossenen Zustand des Gehäuses lateral auf einer zweiten Seite der zentralen Ausnehmung angeordnet sind, wobei die zweite Seite der ersten Seite gegenüberliegt, sodass sich die Ausnehmung zwischen den ersten und den zweiten Ultraschallwandlern befindet, wobei die Ultraschallwandler derart angeordnet und ausgerichtet sind, dass jeweils ein erster Ultraschallwandler ein erstes Messsignal schräg zur Strömungsrichtung an einen der zweiten Ultraschallwandler aussenden kann, und ein von diesem zweiten Ultraschallwandler schräg zur Strömungsrichtung ausgesendetes zweites Messsignal empfangen kann, und wobei mindestens ein Ultraschallwandler vorgesehen ist, welcher so ausgerichtet und angeordnet ist, dass er ein senkrecht zur Strömungsrichtung fortschreitendes Messsignal empfangen kann.

Die erfindungsgemässe Ultraschall-Messvorrichtung umfasst also mindestens vier Ultraschallwandler, wobei jeder der ersten Ultraschallwandler jeweils mit einem der zweiten Ultraschallwandler ein Paar bildet, dass Ultraschallsignale schräg zur Strömungsrichtung miteinander austauschen kann, das heisst der erste und der zweite Ultraschallwandler eines Paares sind so angeordnet und ausgerichtet, dass der zweite Ultraschallwandler ein von dem ersten Ultraschallwandler ausgesandtes Signal empfangen kann und der erste Ultraschallwandler ein von dem zweiten Ultraschallwandler ausgesandtes Signal empfangen kann. Hierdurch kann, wie bereits eingangs erläutert, ein Messsignal empfangen werden, welches schräg in Strömungsrichtung ausgesendet wurde, sowie ein Messsignal, das schräg gegen die Strömungsrichtung ausgesendet wurde. Aus der Laufzeitdifferenz dieser beiden Messsignale lässt sich dann die Strömungsgeschwindigkeit des Fluids ermitteln. Da erfindungsgemäss zumindest zwei solche Paare von Ultraschallwandlern vorgesehen sind, erhöht sich die Genauigkeit bzw. die Zuverlässigkeit der Messung.

Zudem ist ein Ultraschallwandler vorgesehen, welcher so ausgerichtet und angeordnet ist, dass er ein senkrecht zur Strömungsrichtung fortschreitendes Messsignal empfangen kann. Dieser Ultraschallwandler kann entweder einer der ersten oder der beiden zweiten Ultraschallwandler sein, oder es kann mindestens ein weiterer Ultraschallwandler für das senkrecht zur Strömungsrichtiung fortschreitende Messsignal vorgesehen sein. Dieses senkrecht zur Strömungsrichtung fortschreitende Messsignal hat den Vorteil, dass seine Laufzeit - zumindest in sehr guter Näherung - von der Strömungsgeschwindigkeit des Fluids in der Leitung unabhängig ist. Somit lassen sich durch dieses Messsignal Kenngrössen des Fluids ermitteln, welche von der Schallgeschwindigkeit oder der Schalldämpfung in dem Fluid abhängig sind. Hierdurch erweitern sich die Flexibilität und die möglichen Anwendungen der Messvorichtung ganz erheblich. Zudem lassen sich aus Änderungen in der Laufzeit und/oder in der Dämpfung des senkrecht zur Strömungsrichtung fortschreitenden Messsignals Änderungen in dem Fluid, beispielsweise eine Änderung der Konzentration einer Komponente des Fluids, erkennen.

Ferner ist es aufgrund der mindestens vier Ultraschallwandler auch möglich, die Eigenschaften der Leitung zu berücksichtigen bzw. zu untersuchen und sie mit Kalibrierungs- oder Eichdaten für die Leitung zu vergleichen. Da somit die Eigenschaften der spezifischen Leitung im jeweiligen Anwendungsfall berücksichtig werden kann, erhöht sich die Zuverlässigkeit bzw. die Genauigkeit der Messung. Um eine Leitungsgrösse zu ermitteln, womit eine Grösse gemeint ist, welche Eigenschaften der Leitung beschreibt, z. B. die Wanddicke, das Material aus dem die Leitung besteht, o.ä., ist es beispielsweise möglich, dass von einem der ersten Ultraschallwandler ein Ultraschallsignal in Richtung der Leitung ausgesendet wird. Dieses Signal wird im Folgenden als Charakterisierungssignal bezeichnet. Das Charakterisierungssignal wird zumindest teilweise von der Leitung reflektiert. Dies kann beispielsweise eine mehrfache Reflexion innerhalb der Wandung der Leitung sein. Detektiert wird dann das (mehrfach) in der Wandung der Leitung reflektierte Charakterisierungssignal von dem anderen ersten Ultraschallwandler, der ja auf der gleichen ersten Seite der Leitung angeordnet ist, wie derjenige erste Ultraschallwandler, der das Charakterisierungssignal ausgesendet hat. Aus der Laufzeit des Charakterisierungssignals und/oder aus seiner Dämpfung kann dann eine Leitungsgrösse ermittelt werden. Beispielsweise durch Vergleich der ermittelten Leitungsgrösse mit Werten, die an neuen oder anderweitig charakterisierten Leitungen ermittelt wurden, kann dann eine Kalibrierung der Ultraschall-Messvorrichtung auf die im jeweiligen Anwendungsfall verwendete Leitung erfolgen. Durch diese Massnahme lässt sich die Messgenauigkeit der Messungen an dem Fluid erhöhen.

Erfindungsgemäß ist die Ultraschall-Messvorrichtung als Klemmvorrichtung für eine Klemmverbindung mit der Leitung ausgestaltet, mit einem ersten Gehäuseteil, welche die erste Seite umfasst, und mit einem zweiten Gehäuseteil, welches die zweite Seite umfasst, wobei das erste Gehäuseteil und das zweite Gehäuseteil gelenkig miteinander verbunden sind. Im geöffneten Zustand kann dann die Leitung in die zentrale Ausnehmung eingelegt werden, die beiden Gehäuseteile werden anschliessend einfach zusammengeklappt und miteinander verriegelt, sodass in diesem geschlossenen Zustand die Ultraschall-Messvorrichtung auf die Leitung geklemmt ist, wodurch die Leitung bezüglich des Gehäuses fixiert ist.

In einer bevorzugten Ausführungsform sind die vier Ultraschallwandler im geschlossenen Zustand des Gehäuses kreuzförmig angeordnet, sodass jeweils einer der ersten Ultraschallwandler auf der ersten Seite einem der zweiten Ultraschallwandler auf der zweiten Seite gegenüberliegt. Bei dieser kreuzförmigen Anordnung fluchtet - bezüglich einer Senkrechten zur Strömungsrichtung - jeweils einer der ersten Ultraschallwandler mit einem der zweiten Ultraschallwandler, und zwar mit demjenigen zweiten, mit dem er kein Paar bildet. Diese Anordnung bietet den Vorteil, dass mit jedem zweiten Ultraschallwandler auch ein senkrecht zur Strömungsrichtung fortschreitendes Messsignal empfangen werden kann, das von dem jeweils gegenüberliegenden ersten Ultraschallwandler ausgesendet wird, und umgekehrt.

Eine bevorzugte Massnahme besteht darin, dass zwischen den beiden ersten Ultraschallwandlern und/oder zwischen den beiden zweiten Ultraschallwandlern ein Dämpfungselement vorgesehen ist, mit welchem ein direkter Austausch von Ultraschallsignalen zwischen den beiden ersten Ultraschallwandlern und/oder zwischen den beiden zweiten Ultraschallwandlern unterdrückt wird. Dies ist insbesondere auch für die vorangehend beschriebene Ermittlung der Leitungsgrösse vorteilhaft, bei welcher ja ein Signalaustausch zwischen den beiden ersten oder zwischen den beiden zweiten Ultraschallwandlern erfolgt. Durch das Dämpfungselement wird unterdrückt, dass ein von dem einen ersten Ultraschallwandler ausgesendetes Signal direkt, also ohne dass es reflektiert wird, zu dem anderen ersten Ultraschallwandler gelangt. Letzterer empfängt also im Wesentlichen nur solche Ultraschallsignale, die von der Leitung und insbesondere in der Wandung der Leitung mindestens einmal reflektiert wurden. Gleiches gilt analog für die zweiten Ultraschallwandler. Das Dämpfungselement kann aus jedem an sich bekannten Material bestehen, dass eine sehr hohe bzw. starke Dämpfung für Ultraschallwellen aufweist, oder ein solches Material umfassen.

Bei einem Ausführungsbeispiel ist die Ultraschall-Messvorrichtung mit sechs Ultraschallwandlern ausgestaltet, nämlich den beiden ersten Ultraschallwandlern, den beiden zweiten Ultraschallwandlern, sowie zwei Eichwandlern zum jeweiligen Aussenden und Empfangen von Ultraschallsignalen, wobei im geschlossenen Zustand des Gehäuses auf der ersten Seite und auf der zweiten Seite jeweils einer der Eichwandler angeordnet ist, wobei die beiden Eichwandler sich gegenüberliegen, und wobei die beiden Eichwandler jeweils zum Aussenden eines Ultraschallsignals senkrecht zur Strömungsrichtung angeordnet und ausgerichtet sind. Bei diesen Eichwandlern sind also die jeweiligen Sende- und Empfangsflächen für die Ultraschallsignale parallel zur Strömungsrichtung ausgerichtet, sodass die Hauptausbreitungsrichtung der von den Eichwandlern generierten Ultraschallsignale jeweils senkrecht auf der Strömungsrichtung steht. Diese beiden Eichwandler lassen sich daher vorteilhaft sowohl für eine von der Strömungsgeschwindigkeit des Fluids unabhängige Bestimmung der Schallgeschwindigkeit im Fluid nutzen, und damit zur Ermittlung von Kenngrössen des Fluids, welche von der Schallgeschwindigkeit oder der Schalldämpfung in dem Fluid abhängig sind, als auch für die Bestimmung einer oder mehrerer Leitungsgrössen, welche für die jeweilige Leitung charakteristisch sind.

Eine weitere bevorzugte Massnahme besteht darin, dass die Ultraschall-Messvorrichtung ferner einen Temperatursensor zum Bestimmen der Temperatur des Fluids umfasst. Dies vergrössert den Anwendungsbereich der Messvorrichtung, weil somit auch Kenngrössen des Fluids ermittelt werden können, deren Zusammenhang mit der Schallgeschwindigkeit oder der Schalldämpfung temperaturabhängig ist.

Die erfindungsgemässe Ultraschall-Messvorrichtung ist insbesondere für flexible Leitungen, beispielsweise Kunststoffschläuche geeignet. Daher ist es eine bevorzugte Massnahme, dass die zentrale Ausnehmung im geschlossenen Zustand des Gehäuses senkrecht zur Strömungsrichtung einen im Wesentlichen rechteckigen, vorzugsweise quadratischen, Querschnitt aufweist. Dadurch wird die flexible Leitung, die üblicherweise einen runden Querschnitt hat, durch das Gehäuse auf einen im Wesentlichen rechteckigen oder quadratischen Querschnitt deformiert, was vorteilhaft für die Ultraschallmessung ist, beispielsweise weil die Ultraschallwellen dann im Wesentlichen nur auf planare, nicht aber auf gekrümmte Oberflächen treffen.

Durch die Erfindung wird ferner ein Verfahren zur Ultraschallmessung an einem in einer Leitung strömenden Fluid mittels dem erfindungsgemäßen Ultraschall-Messvorrichtung vorgeschlagen, umfassend die folgenden Schritte:
a) Befestigen des Gehäuses der Ultraschall-Messvorrichtung an der Leitung, derart, dass die Leitung von der durchgängigen zentralen Ausnehmung, die eine Längserstreckung hat, welche die Strömungsrichtung festlegt, aufgenommen und bezüglich des Gehäuses fixiert wird;
b) Aussenden und Empfangen von Messsignalen mittels mindestens vier Ultraschallwandlern, nämlich mindestens zwei ersten Ultraschallwandlern, welche lateral auf der ersten Seite der zentralen Ausnehmung angeordnet sind, und mindestens zwei zweiten Ultraschallwandlern, welche lateral auf der zweiten Seite der zentralen Ausnehmung angeordnet sind, wobei die zweite Seite der ersten Seite gegenüberliegt, sodass sich die Ausnehmung mit der Leitung zwischen den ersten und den zweiten Ultraschallwandlern befindet, wobei
   - jeweils ein erster Ultraschallwandler ein erstes Messsignal schräg zur Strömungsrichtung an einen der zweiten Ultraschallwandler aussendet oder ein von diesem zweiten Ultraschallwandler schräg zur Strömungsrichtung ausgesendetes zweites Messsignal empfängt,
   - mit mindestens einem Ultraschallwandler ein senkrecht zur Strömungsrichtung fortschreitendes Messsignal empfangen wird;
c) Übermitteln der empfangenen Messsignale an eine Auswerteeinheit;
d) Ermitteln mindestens einer Kenngrösse, welche von der Schallgeschwindigkeit oder der Schalldämpfung in dem Fluid abhängig ist, mit Hilfe der empfangenen Messsignale.

Die vorangehenden Erläuterungen bezüglich der erfindungsgemässen Ultraschall-Messvorrichtung gelten in gleicher oder in sinngemäss gleicher Weise auch für das erfindungsgemässe Verfahren.

Vorzugsweise wird die Kenngrösse mittels der Laufzeit eines Messsignals, oder einer Laufzeitdifferenz zweier Messsignale oder mittels der Dämpfung eines Messsignals ermittelt wird. Dadurch, dass sowohl die Dämpfung als auch die Laufzeit der Messsignale berücksichtigt werden können, vergrössert sich der Anwendungsbereich des Verfahrens.

Wie bereits erwähnt, ist es im Hinblick auf die Eigenschaften der jeweils verwendeten Leitung bevorzugt, wenn von einem der ersten Ultraschallwandler oder von einem der zweiten Ultraschallwandler ein Charakterisierungssignal in Richtung der Leitung ausgesendet wird, und das von der Leitung reflektierte Charakterisierungssignal von einem der ersten Ultraschallwandler oder von einem der zweiten Ultraschallwandler empfangen wird, welcher auf derselben Seite angeordnet ist, wie der Ultraschallwandler, welcher das Charakterisierungssignal ausgesendet hat, und wobei mittels des empfangenen Charakterisierungssignals eine Leitungsgrösse ermittelt wird.

Auch verfahrenstechnisch ist es eine weitere bevorzugte Massnahme, wenn mittels zweier Eichwandler, von denen einer auf der ersten Seite und einer auf der zweiten Seite angeordnet ist, mindestens ein Ultraschallsignal senkrecht zur Strömungsrichtung ausgesendet wird, das von dem gleichen oder dem anderen Eichwandler empfangen wird, wobei das empfangene Signal zur Ermittlung der Leitungsgrösse und/oder zur Ermittlung der Kenngrösse herangezogen wird.

Weiterhin ist es bevorzugt, dass ferner mittels eines Temperatursensors die Temperatur des Fluids ermittelt wird und zur Ermittlung mindestens einer Kenngrösse herangezogen wird.

Verfahrenstechnisch ist es eine weitere bevorzugte Massnahme, dass mit mindestens einem Ultraschallwandler ein kontinuierliches Ultraschallsignal ausgesendet wird, dessen Amplitude über einen vorgebbaren Zeitraum im Wesentlichen konstant ist. Bei dieser Massnahme hat das Ultraschallsignal über einen längeren Zeitraum eine im Wesentlichen konstante Amplitude. Dies hat im Vergleich zu einem kurzen Ultraschallimpuls den Vorteil, dass sich eine höhere Auflösung erzielen lässt, dass die transienten Anteile, also insbesondere die Ein- und Ausschwingvorgänge praktisch keine Beeinflussung der Messung mehr darstellen, und dass das gleichzeitige Senden und Empfangen von Ultraschallsignalen deutlich weniger empfindlich für Störeffekte ist, beispielsweise Turbulenzen im Fluid, Temperaturschwankungen, usw.

Vorzugsweise wird das kontinuierliche Ultraschallsignal durch eine Folge von diskreten Impulsen generiert wird, wobei der zeitliche Abstand zwischen zwei Impulsen kleiner ist als die Abklingzeit eines Impulses.

Beispielsweise wird mit dem erfindungsgemässen Verfahren eine oder mehrere der folgenden Kenngrössen ermittelt: Durchfluss des Fluids durch die Leitung, Volumen- oder Massenanteil einer Komponente des Fluids, Konzentration einer in dem Fluid enthaltenen Komponente, ein Feststoffanteil in dem Fluid, optische Dichte des Fluids, Zelldichte im Fluid, Viskosität des Fluids, physikalische Dichte des Fluids, Gaskonzentration im Fluid, Änderung in der Zusammensetzung des Fluids.

Als konkrete Beispiels seien hier genannt: Die Alkoholkonzentration, beispielsweise die Methanol Konzentration, im Fluid in Volumenprozent; die Natriumhydroxid (NaOH) Konzentration im Fluid in Volumenprozent; eine Enzym- oder Eiweiss Konzentration in Gramm pro Liter in einem biologischen Fluid, z. B. die Konzentration von Rinderserumalbumin (BSA: bovine serum albumin) oder einem anderen Globulin in Wasser; der Feststoffanteil in einer Suspension (Slurry), z. B. in einer Suspension von Siliziumdioxid (SiO₂) in Wasser, oder die Zelldichte in einem Bioreaktor, welche üblicherweise über die optische Dichte bestimmt wird, beispielsweise die optische Dichte OD₆₀₀ in einer E-Coli Zellsuspension bei einer Wellenlänge von 600 nm.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:
- Fig. 1:: ein Beispiel einer Ausgestaltung des Gehäuses einer erfindungsgemässen Ultraschall-Messvorrichtung,
- Fig. 2:: eine schematische Darstellung eines ersten Ausführungsbeispiels einer erfindungsgemässen Ultraschall-Messvorrichtung,
- Fig. 3:: wie Fig. 2 aber für eine erste Variante,
- Fig. 4:: wie Fig. 2 aber für eine zweite Variante,
- Fig. 5:: eine schematische Darstellung eines zweiten Ausführungsbeispiels einer erfindungsgemässen Ultraschall-Messvorrichtung,
- Fig. 6:: eine Darstellung einer Impulsfolge zum Generieren eines kontinuierlichen Ultraschallsignals, sowie die Darstellung empfangener Ultraschallsignale,
- Fig. 7-11:: Diagramme, die jeweils den Zusammenhang zwischen einer Kenngrösse des Fluids und der Schallgeschwindigkeit zeigen,
- Fig. 12-13:: Diagramme, die jeweils den Zusammenhang zwischen einer Kenngrösse des Fluids und der Schalldämpfung zeigen, und
- Fig. 14:: ein Diagramm, das die Schallgeschwindigkeit in zwei unterschiedlichen Materialien für die Leitung zeigt.

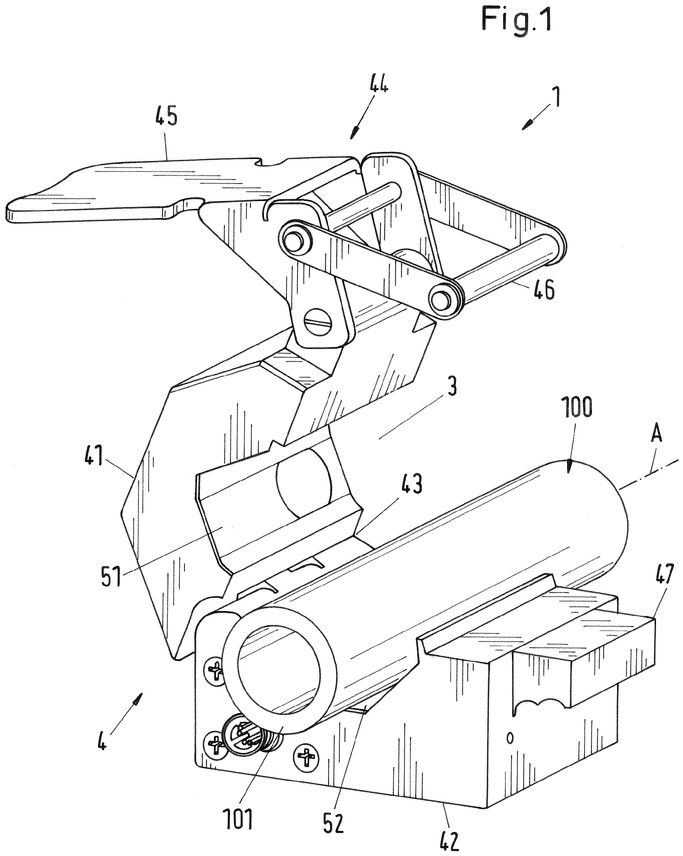

Fig. 1 zeigt in einer perspektivischen Darstellung ein Beispiel einer Ausgestaltung eines Gehäuses einer erfindungsgemässen Ultraschall-Messvorrichtung. Diese beispielhafte Ausgestaltung ist für alle nachfolgend beschriebenen Ausführungsbeispiele und ihre Varianten verwendbar. Die Ultraschall-Messvorrichtung ist gesamthaft mit dem Bezugszeichen 1 bezeichnet und das Gehäuse der Ultraschall-Messvorrichtung 1 ist mit dem Bezugszeichen 4 bezeichnet.

Die Ultraschall-Messvorrichtung 1 ist erfindungsgemäß als eine Klemmvorrichtung für eine Klemmverbindung mit einer Leitung 100 ausgestaltet, d.h. das Gehäuse 4 der Ultraschallmessvorrichtung 1 kann auf eine Leitung geklemmt werden, derart, dass die Leitung 100 bezüglich des Gehäuses 4 fixiert ist. Die prinzipielle Ausgestaltung des Gehäuses 4, die in Fig. 1 dargestellt ist, ist an sich bekannt, beispielsweise von den Ultraschall-Flussmessern, welcher von der Anmelderin unter dem Handelsnamen LEVIFLOW angeboten und vertrieben wird

Im Folgenden wird auf den für die Praxis besonders wichtigen Fall Bezug genommen, dass die Leitung 100 eine flexible Leitung 100 ist, also eine Leitung 100, deren Wandung 101 deformierbar ist. Die flexible Leitung 100 ist beispielsweise ein Kunststoffschlauch, der aus einem Silikonkautschuk oder aus PVC besteht. Natürlich kann die Leitung 100 auch aus anderen Materialien, insbesondere aus einem Kunststoff oder einem Kautschuk bestehen.

Das Gehäuse 4 ist als schliessbares Gehäuse 4 ausgestaltet und umfasst ein erstes Gehäuseteil 41 sowie ein zweites Gehäuseteil 42, welche über ein Gelenk 43 gelenkig miteinander verbunden sind. Fig. 1 zeigt das Gehäuse 4 im geöffneten Zustand. Das Gehäuse 4 weist ferner eine durchgängige zentrale Ausnehmung 3 auf, welche sich durch das gesamte Gehäuse 4 erstreckt und zur Aufnahme der Leitung 100 dient. Die Längserstreckung der zentralen Ausnehmung 3 legt eine Strömungsrichtung A fest, in welcher ein Fluid die Leitung 100 bzw. das Gehäuse 4 durchströmt.

Das Gehäuse 4 weist ferner einen Verschlussmechanismus 44 auf, um das Gehäuse 4 zu verschliessen und damit die Leitung 100 in der zentralen Ausnehmung 3 einzuklemmen. Der Verschlussmechanismus 44 ist hier am ersten Gehäuseteil 41 angeordnet und umfasst einen Bügel 46 sowie eine klappbare Lasche 45 zum Spannen des Bügels 46. Die Leitung 100 wird in die zentrale Ausnehmung 3 eingelegt, anschliessend werden die beiden Gehäuseteile 41, 42 zusammengeklappt, d.h. das erste Gehäuseteil 41 wird über die Leitung 100 geklappt. Der Bügel 46 wird in Eingriff mir einem Vorsprung 47 am zweiten Gehäuseteil 42 gebracht, und durch Betätigen der Lasche 45 werden die beiden Gehäuseteile 41, 42 miteinander verspannt. Das Gehäuse 4 ist dann in seinem geschlossenen Zustand, in welchem die Leitung 100 in der zentralen Ausnehmung 3 eingeklemmt und somit bezüglich des Gehäuses 4 fixiert ist.

Im geschlossenen Zustand des Gehäuses 1 ist die Leitung somit zwischen einer ersten Seite 51 und einer zweiten Seite 52 fixiert, welche sich bezüglich der zentralen Ausnehmung 3 gegenüberliegen.

Am Gehäuse 4 kann ferner ein Markierungselement (nicht dargestellt) vorgesehen sein, beispielsweise ein Pfeil, welches die Strömungsrichtung festlegt, in welcher das Fluid die Ultraschall-Messvorrichtung 1 durchströmen soll.

Die zentrale Ausnehmung 3 ist vorzugsweise so ausgestaltet, dass sie im geschlossenen Zustand des Gehäuses 4 senkrecht zur Strömungsrichtung A einen im Wesentlichen rechteckigen, insbesondere einen quadratischen Querschnitt aufweist. Dies hat den Vorteil, dass Ultraschallmesssignale, mit welchen die Leitung 100 beaufschlagt wird, auf planare, d.h. nicht gekrümmte, Oberflächen treffen, wodurch sich die Detektion und die Auswertung der Messsignale stark vereinfacht und die Genauigkeit der Messung erhöht wird.

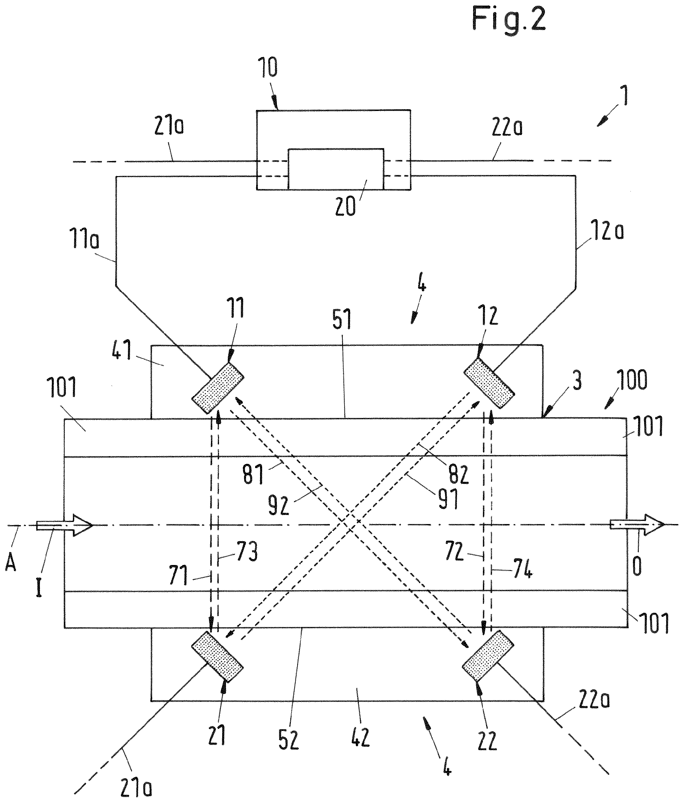

Fig. 2 zeigt in einer schematischen Darstellung eines ersten Ausführungsbeispiels einer erfindungsgemässen Ultraschall-Messvorrichtung 1. Das Gehäuse 4 der Ultraschall-Messvorrichtung 1 kann insbesondere wie anhand von Fig. 1 erläutert ausgestaltet sein.

Bei diesem ersten Ausführungsbeispiel sind im Gehäuse 4 insgesamt vier Ultraschallwandler 11,12, 21, 22 zum jeweiligen Aussenden und Empfangen von Ultraschallsignalen vorgesehen, nämlich zwei erste Ultraschallwandler 11,12, welche im geschlossenen Zustand des Gehäuses 4 lateral auf der ersten Seite 51 der zentralen Ausnehmung 3 angeordnet sind, und zwei zweite Ultraschallwandler 21 und 22, welche im geschlossenen Zustand des Gehäuses lateral auf der zweiten Seite 52 der Ausnehmung 3 angeordnet sind. Die ersten Ultraschallwandler 11,12 sind also in dem ersten Gehäuseteil 41 vorgesehen, und die zweiten Ultraschallwandler 21,22 in dem zweiten Gehäuseteil 42, sodass sich die zentrale Ausnehmung 3, bzw. die in diese eingelegte Leitung 100 zwischen den beiden ersten Ultraschallwandlern 11,12 und den beiden zweiten Ultraschallwandlern 21,22 befindet.

Jeder der Ultraschallwandler 11, 12, 21, 22 ist über jeweils eine Signalleitung 11a, 12a, 21a bzw. 22a mit einer Kontrolleinrichtung 10 signalverbunden. Über die jeweilige Signalleitung 11a, 12a, 21a bzw. 22a steuert die Kontrolleinrichtung 10 die Ultraschallwandler 11, 12, 21, 22 zum Aussenden von Ultraschallsignalen an und erhält die von den Ultraschallwandlern 11, 12, 21, 22 empfangenen Signal. Die von den Ultraschallwandlern 11, 12, 21, 22 empfangenen Messsignale werden an eine Auswerteeinheit 20 übermittelt, welche in die Kontrolleinrichtung 10 integriert sein kann. In der Auswerteeinheit 20 werden die empfangenen Messsignale analysiert, und es wird wenigstens eine Kenngrösse ermittelt, welche von der Schallgeschwindigkeit oder der Schalldämpfung in dem Fluid abhängig ist.

Die Ultraschallwandler 11, 12, 21, 22 können in jeder an sich bekannten Art ausgestaltet sein, insbesondere als piezoelektrische Wandler. Die Frequenz der Ultraschallsignale liegt typischerweise im Megahertz-Bereich, beispielsweise im Bereich von 1 MHz bis 30 MHz.

Im geschlossenen Zustand des Gehäuses 4, den auch die Darstellung in Fig. 2 wiedergibt, sind die vier Ultraschallwandler 11, 12, 21, 22 kreuzförmig angeordnet, wobei die beiden ersten Ultraschallwandler 11, 12 in dem darstellungsgemäss (Fig. 2) oberen ersten Gehäuseteil 41 auf der ersten Seite 51 der zentralen Ausnehmung 3 angeordnet sind, und die beiden zweiten Ultraschallwandler 21, 22 in dem darstellungsgemäss unteren zweiten Gehäuseteil 42 auf der zweiten Seite 52 der zentralen Ausnehmung 3. Dabei sind die beiden ersten Ultraschallwandler 11, 12 spiegelsymmetrisch bezüglich der Strömungsrichtung A zu den beiden zweiten Ultraschallwandlern 21, 22 angeordnet, sodass jeweils einem der ersten Ultraschallwandler 11, 12 auf der ersten Seite 51 einer der zweiten Ultraschallwandler 21, 22 gegenüberliegt. Die vier Ultraschallwandler 11, 12, 21, 22 liegen also auf den Ecken eines gedachten Rechtecks, wobei sich jeweils ein erster Ultraschallwandler 11 bzw. 12 und ein zweiter Ultraschallwandler 21 bzw. 22 diagonal gegenüberliegen.

Die beiden sich diagonal gegenüberliegenden Ultraschallwandler 11, 22 bzw. 12, 21 bilden jeweils ein Paar, wobei die Ultraschallwandler 11, 22 bzw. 12, 21, die gemeinsam ein Paar bilden, so angeordnet und ausgerichtet sind, dass ihre Sende- und Empfangsflächen, die typischerweise von einem piezoelektrischen Kristall gebildet werden, parallel zueinander sind.

Das heisst, die Ultraschallwandler 11, 22 sind so angeordnet, dass der erste Ultraschallwandler 11 ein erstes Messsignal 81 schräg zur Strömungsrichtung A an den zweiten Ultraschallwandler 22 aussenden kann, und ein von dem zweiten Ultraschallwandler 22 ausgesendetes zweites Messsignal 92 empfangen kann.

Sinngemäss gleiches gilt für das Paar von Ultraschallwandlern 12, 21. Die Ultraschallwandler 12, 21 sind so angeordnet, dass der erste Ultraschallwandler 12 ein erstes Messsignal 82 schräg zur Strömungsrichtung A an den zweiten Ultraschallwandler 21 aussenden kann, und ein von dem zweiten Ultraschallwandler 21 ausgesendetes zweites Messsignal 91 empfangen kann.

Die Messsignale 81,82,91,92 sind in Fig. 2 symbolisch jeweils durch gestrichelte gerade Linien mit einer Pfeilspitze dargestellt. Dies ist so zu verstehen, dass die gestrichelte Linie jeweils die Hauptausbreitungsrichtung des von dem entsprechenden Ultraschallwandlers 11, 12, 21, 22 ausgesendeten Ultraschallsignals angibt und die Pfeilspitze die Richtung, also ob sich das jeweilige Ultraschallsignal auf den jeweiligen Ultraschallwandler 11, 12, 21, 22 zubewegt, also empfangen wird, oder von diesem weg bewegt, also gesendet wird. Die Hauptausbreitungsrichtung steht üblicherweise senkrecht auf der Oberfläche des piezoelektrischen Elements des entsprechenden Ultraschallwandlers 11, 12, 21, 22.

Die Strömungsrichtung A ist in Fig. 2 mittig in der Leitung 100 eingezeichnet. Zudem zeigt der mit dem Bezugszeichen I versehene Pfeil an, von welcher Seite das Fluid in die Ultraschall-Messvorrichtung 1 einströmt, und der mit dem Bezugszeichen O versehene Pfeil zeigt an, auf welcher Seite das Fluid aus der Ultraschall-Messvorrichtung 1 herausströmt. Gemäss der Darstellung in Fig. 2 strömt das Fluid also von links nach rechts.

Wie das in Fig. 2 zu erkennen ist, werden das erste Messsignal 81 und das zweite Messsignal 91 jeweils schräg zur Strömungsrichtung A und in Strömungsrichtung A ausgesendet, womit gemeint ist, dass die Hauptausbreitungsrichtung des jeweiligen Messsignals 81 bzw.91 eine von Null verschiedene Komponente in Strömungsrichtung A und eine von Null verschiedene Komponente senkrecht zur Strömungsrichtung A hat.

Das erste Messsignal 82 und das zweite Messsignal 92 werden jeweils schräg zur Strömungsrichtung A und gegen die Strömungsrichtung A ausgesendet, womit gemeint ist, dass die Hauptausbreitungsrichtung des jeweiligen Messsignals 82 bzw.92 eine von Null verschiedene Komponente entgegen der Strömungsrichtung A und eine von Null verschiedene Komponente senkrecht zur Strömungsrichtung A hat.

Da die Ultraschallwandler 11, 12, 21, 22 jeweils schräg zur Strömungsrichtung A angeordnet und ausgerichtet sind, beispielsweise unter einem Winkel von jeweils etwa 45°, kann jeder der Ultraschallwandler 11, 12, 21, 22 jeweils auch ein Ultraschallsignal empfangen, welches senkrecht zur Strömungsrichtung A fortschreitet. Ein solches senkrecht zur Strömungsrichtung A fortschreitendes Ultraschallsignal trifft schräg auf die jeweilige piezoelektrische Sende- und Empfangsfläche des jeweiligen Ultraschallwandlers 11, 12, 21, 22 auf und kann somit von diesem empfangen und in ein elektrisches Signal umgewandelt werden.

Ferner breitet sich das von einem der Ultraschallwandler 11, 12, 21, 22 jeweils ausgesendete Ultraschallsignal nicht nur in der Hauptausbreitungsrichtung aus, sondern es existieren insbesondere auch Signalanteile, die senkrecht zur Strömungsrichtung A fortschreiten. Diese Signalanteile können beispielsweise Neben- oder Seitenmaxima (häufig auch als Neben- oder Seitenkeulen bezeichnet) des von dem jeweiligen Ultraschallwandler 11, 12, 21, 22 ausgesendeten Ultraschallsignals sein. Im Folgenden werden diese Signalanteile, welche jeweils senkrecht zur Strömungsrichtung A fortschreiten, bzw. laufen, als dritte Messsignale 71 -74 bezeichnet, wobei das dritte Messsignal 71 von dem ersten Ultraschallwandler 11 ausgesendet wird, das dritte Messsignal 72 von dem ersten Ultraschallwandler 12, das dritte Messsignal 73 von dem zweiten Ultraschallwandler 21, und das dritte Messsignal 74 von dem zweiten Ultraschallwandler 22.

Zur Bestimmung des Durchflusses des Fluids durch die Leitung 100 wird beispielsweise wie folgt vorgegangen. Nachdem die Leitung 100 in das Gehäuse 4 eingelegt ist und das Gehäuse 4 geschlossen ist, durchströmt das Fluid die Ultraschall-Messvorrichtung 1.

Die beiden ersten Ultraschallwandler 11 und 12 senden jeweils ein erstes Messsignal 81 bzw. 82 aus, wobei das erste Messsignal 81 schräg und in Strömungsrichtung A ausgesendet wird, und das erste Messsignal 82 schräg und gegen die Strömungsrichtung A. Die beiden ersten Messsignale 81 und 82 werden von den beiden zweiten Ultraschallwandlern 22 bzw. 21 nach Durchlaufen des Fluids empfangen und über die jeweilige Signalleitung 22a bzw. 21a an die Auswerteeinheit 20 übermittelt.

Von den beiden zweiten Ultraschallwandlern 21 und 22 wird jeweils ein zweites Messsignal 91 bzw. 92 ausgesendet, wobei das zweite Messsignal 91 schräg und in Strömungsrichtung A ausgesendet wird, und das zweite Messsignal 92 schräg und gegen die Strömungsrichtung A. Die beiden zweiten Messsignal 91 und 92 werden von den beiden ersten Ultraschallwandlern 12 bzw. 11 nach Durchlaufen des Fluids empfangen und über die jeweilige Signalleitung 12a bzw. 11a an die Auswerteeinheit 20 übermittelt.

Die Auswerteeinheit 20 erhält also insgesamt vier empfangene Messsignale, von denen das erste Messsignal 81 und das zweite Messsignal 91 das strömende Fluid schräg und in Strömungsrichtung A durchlaufen haben, während das erste Messsignal 82 und das zweite Messsignal 92 das strömende Fluid schräg und gegen die Strömungsrichtung A durchlaufen haben.

In der Auswerteeinheit 20 werden die Laufzeitdifferenzen ermittelt zwischen denjenigen Messsignalen 81 und 91, welche durch das strömende Fluid beschleunigt wurden, und denjenigen Messsignalen 82 und 92, welche durch das strömende Fluid verlangsamt wurden. Diese Laufzeitdifferenz zwischen den Messsignalen 81,91 in Strömungsrichtung A und den Messsignalen 82, 92 gegen die Strömungsrichtung A ist direkt abhängig von der Strömungsgeschwindigkeit des Fluids in der Leitung 100. Somit kann aus der Laufzeitdifferenz die Strömungsgeschwindigkeit und damit der Durchfluss des Fluids durch die Leitung 100 ermittelt werden.

Besonders vorteilhaft ist dabei, dass sowohl in Strömungsrichtung A als auch entgegen der Strömungsrichtung A jeweils zwei voneinander unabhängige Messungen erfolgen, wodurch sich die Genauigkeit und die Zuverlässigkeit der Bestimmung des Durchflusses deutlich erhöhen.

Zusätzlich zu den ersten und zweiten Messsignalen 81,82,91,92 werden während dem Messvorgang auch die dritten Messsignale 71-74 erfasst, also diejenigen Messsignale, welche senkrecht zur Strömungsrichtung A fortschreiten.

Das heisst beispielsweise, wenn der erste Ultraschallwandler 11 das erste Messsignal 81 in Richtung des zweiten Ultraschallwandlers 22 aussendet, wird nicht nur das von dem zweiten Ultraschallwandler 22 empfangene erste Messsignal 81 ermittelt, sondern es wird zusätzlich auch das von dem anderen zweiten Ultraschallwandler 21 empfangene dritte Messsignal 71 ermittelt. Wie bereits erwähnt bezeichnet hier das dritte Messsignal 71 diejenige Komponente des von dem ersten Ultraschallwandler 11 ausgesendeten Ultraschallsignals, die sich senkrecht zur Strömungsrichtung A ausbreitet. Wenn also der erste Ultraschallwandler 11 ein Signal aussendet, welches dann also das erste Messsignal 81 und das dritte Messsignal 71 bildet, so werden die von beiden zweiten Ultraschallwandlern 21 und 22 empfangenen Messsignale ermittelt und an die Auswerteeinheit 20 übermittelt, nämlich das von dem zweiten Ultraschallwandler 22 empfangene erste Messsignal 81, welches das Fluid schräg und in Strömungsrichtung A durchlaufen hat, sowie das dritte Messsignal 71, welches das strömende Fluid senkrecht zur Strömungsrichtung A durchlaufen hat.

Sinngemäss Gleiches gilt auch für die anderen Ultraschallwandler 12, 21, 22.

Ausser den ersten und zweiten Messsignalen 81, 82, 91, 92, welche das Fluid schräg und in bzw. gegen die Strömungsrichtung A durchlaufen haben, erhält die Auswerteeinheit 20 also zusätzlich die vier dritten Messsignale 71, 72, 73, 74, welche das Fluid jeweils senkrecht zur Strömungsrichtung A durchlaufen haben. Die Auswerteeinheit 20 kann dann die dritten Messsignale 71-74 bezüglich ihrer Laufzeit durch das Fluid, bezüglich ihrer Dämpfung durch das Fluid oder natürlich auch bezüglich Laufzeit und Dämpfung analysieren bzw. auswerten.

Da die vier dritten Messsignale 71-74 das Fluid jeweils senkrecht zu der Strömungsrichtung A durchlaufen, sind ihre jeweiligen Laufzeiten durch das Fluid und ihre jeweiligen Dämpfungen durch das Fluid unabhängig von der Strömungsgeschwindigkeit, mit welcher das Fluid durch die Leitung 100 strömt. Daher können anhand der dritten Messsignale 71-74 die Schallausbreitungseigenschaften in dem Fluid ermittelt werden, und zwar unabhängig von der Strömungsgeschwindigkeit des Fluids in der Leitung 100.

Somit kann mit Hilfe der dritten Messsignale 71-74 mindestens eine Kenngrösse des Fluids ermittelt werden, welche von der Schallgeschwindigkeit oder der Schalldämpfung in dem Fluid abhängig ist. Solche Kenngrössen, auf die später noch eingegangen wird, sind beispielsweise die Viskosität des Fluids, das Auftreten von Luft- oder Gasblasen, die Konzentration von Komponenten in dem Fluid, beispielsweise die Methanol Konzentration, oder der Feststoffanteil in einer Suspension, oder die Zellendichte in einem biologischen Fluid.

Insbesondere können anhand dieser das Fluid senkrecht zu seiner Strömungsrichtung A durchlaufenden dritten Messsignale 71-74 auch Änderungen in dem Fluid, insbesondere Änderungen in seiner Zusammensetzung, detektiert werden, beispielsweise die Zunahme oder die Abnahme der Konzentration oder der Dichte einer Komponente. Daher eignet sich die erfindungsgemässe Ultraschall-Messvorrichtung 1 bzw. das erfindungsgemässe Verfahren insbesondere auch für die Prozessüberwachung, beispielsweise in pharmazeutischen oder biologischen Prozessen oder für die Regelung solcher Prozesse. So kann beispielsweise die Zelldichte, die Protein Konzentration, die Salzkonzentration, die Nährlösungskonzentration, die Zuckerkonzentration oder die Methanol Konzentration in einem Prozess überwacht und geregelt werden. Wird mittels der Ultraschall-Messvorrichtung 1 eine Änderung in einer Kenngrösse detektiert, so können durch einen entsprechend ausgestalteten Regelkreis Korrekturmassnahmen eingeleitet werden, um die Kenngrösse wieder auf ihren Sollwert zu führen.

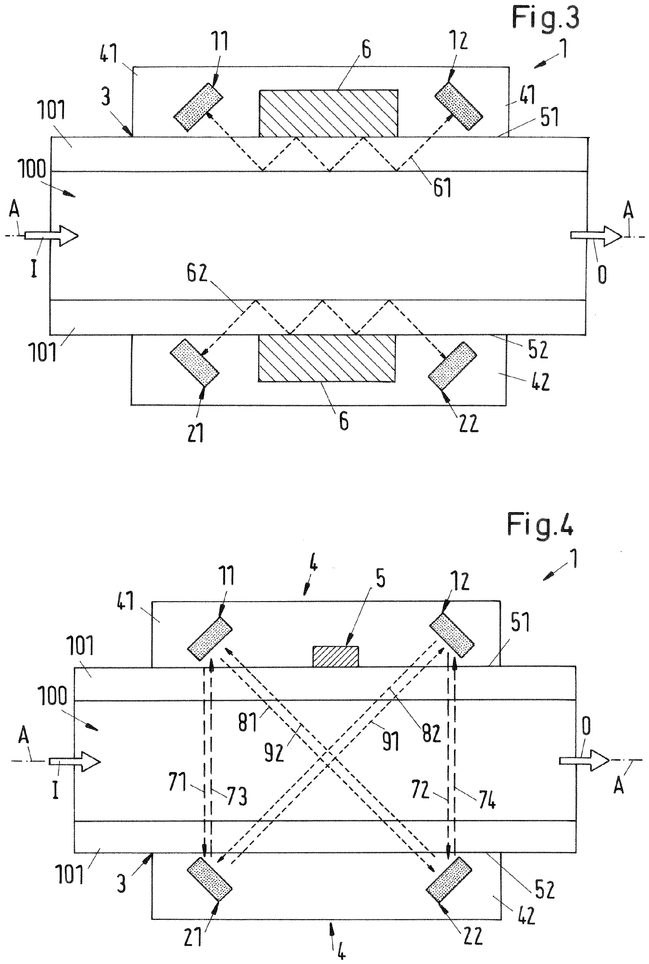

Ein weiterer Vorteil der erfindungsgemässen Ultraschall-Messvorrichtung bzw. des erfindungsgemässen Verfahrens besteht darin, dass sich die Eigenschaften der im jeweiligen Anwendungsfall verwendeten Leitung deutlich besser berücksichtigen lassen, was im Folgenden anhand der Fig. 3 erläutert wird.

Fig. 3 zeigt eine erste Variante des ersten Ausführungsbeispiels, das in Fig. 2 dargestellt ist. Diese erste Variante unterscheidet sich von der Ausführungsform gemäss Fig. 2 dadurch, dass zwischen den beiden ersten Ultraschallwandlern 11, 12 und/oder zwischen den beiden zweiten Ultraschallwandlern 21,22 jeweils ein Dämpfungselement 6 angeordnet ist, das weiter hinten noch erläutert wird. Dieses Dämpfungselement 6 bzw. diese Dämpfungselemente 6 sind vorteilhaft, aber optional, d.h. die folgenden Erläuterungen gelten auch für die in Fig. 2 dargestellte Ausführungsform.

Aus Gründen der besseren Übersicht sind in Fig. 3 die verschiedenen Messsignale 81,82,91,92,71,72,73,74 sowie die Kontrollvorrichtung 10 mit der Auswerteeinheit 20 und die Signalleitungen 11a, 12a, 21a, 22a nicht nochmals dargestellt. Es versteht sich, dass die anhand von Fig. 2 durchgeführten Erläuterungen auch für die in Fig. 3 dargestellte erste Variante gelten.

Um die Eigenschaften der im jeweiligen Anwendungsfall verwendeten Leitung 100 besser zu berücksichtigen bzw. zu untersuchen, kann mittels der beiden ersten Ultraschallwandler 11, 12 und/oder mittels der zweiten Ultraschallwandler 21, 22 eine Leitungsgrösse ermittelt werden, womit eine Grösse gemeint ist, welche Eigenschaften der im jeweiligen Anwendungsfall verwendeten Leitung 100 beschreibt, beispielsweise die Dicke der Wandung 101 oder das Material, aus welchem die Leitung 100 besteht. Dies wird im Folgenden beispielhaft anhand der beiden ersten Ultraschallwandler 11, 12 erläutert. Mit dem ersten Ultraschallwandler 11 wird ein im Folgenden als Charakterisierungssignal 61 bezeichnetes Ultraschallsignal in Richtung der Leitung 100 ausgesendet. Dieses Charakterisierungssignal 61, bzw. Teile davon, werden in der Wandung 101 der Leitung 100 mehrfach reflektiert, nämlich an der darstellungsgemäss (Fig. 3) unteren Grenzfläche der darstellungsgemäss oberen Wandung 101 zwischen der Wandung 101 und dem Inneren der Leitung 100 sowie an der darstellungsgemäss oberen Grenzfläche zwischen der Wandung 101 und dem ersten Gehäuseteil 41. Da diese beiden Grenzflächen in der Regel einen Übergang zwischen zwei Medien mit unterschiedlicher Schallkennimpedanz darstellen, wird beim jeweiligen Auftreffen des Charakterisierungssignals 61 ein Teil des Signals reflektiert und ein anderer Teil, der Transmissionsanteil, durchdringt die Grenzfläche. Mit dem anderen der beiden ersten Ultraschallwandler, nämlich mit dem ersten Ultraschallwandler 12, wird das von dem ersten Ultraschallwandler 11 ausgesendete Charakterisierungssignal 61 empfangen und der Auswerteeinheit 20 zugeführt.

Die Laufzeit des von dem ersten Ultraschallwandlers 12 empfangenen Charakterisierungssignals 61 hängt von der Dicke der Wandung 101 der Leitung 100 und auch vom Material der Leitung 100 ab. Somit lässt sich aus dem empfangenen Charakterisierungssignal 61 mindestens eine Leitungsgrösse ermitteln. Um die Genauigkeit der Ermittlung der Leitungsgrösse zu erhöhen, ist es möglich, mit jedem der beiden ersten Ultraschallwandler 11 bzw. 12 jeweils ein Charakterisierungssignal 61 auszusenden, das dann von dem jeweils anderen ersten Ultraschallwandler 12 bzw. 11 empfangen und an die Auswerteeinheit 20 übermittelt wird. Dies ist in Fig. 3 durch den Doppelpfeil dargestellt, welcher das Charakterisierungssignal 61 repräsentiert.

Alternativ, aber vorzugsweise ergänzend können in sinngemäss gleicher Weise auch zwischen den beiden zweiten Ultraschallwandlern 21 und 22 Charakterisierungssignale 62 ausgetauscht werden, welche zur Ermittlung der Leitungsgrösse herangezogen werden. Ferner ist es möglich, dass auch die Dämpfung der Charakterisierungssignale 61,62 zur Ermittlung der oder einer Leitungsgrösse herangezogen werden.

Die ermittelte Leitungsgrösse kann dann mit Kalibrierungsdaten verglichen werden, die beispielsweise an neuen, d.h. unbenutzten Leitungen bestimmt worden sind, oder mit sonstigen bekannten Daten. Auf diese Weise ist es möglich, anhand der Leitungsgrösse die Eigenschaften der im jeweiligen Anwendungsfall verwendeten Leitung 100 bei der Messung an dem Fluid zu berücksichtigen, wodurch sich die Messgenauigkeit der an dem Fluid durchgeführten Messungen erhöht.

Falls die Schallkennimpedanz des Fluids in der Leitung 100 sehr nahe an der Schallkennimpedanz der Wandung 101 liegt, kann die Ermittlung der Leitungsgrösse auch an der leeren Leitung 100 erfolgen, also wenn die Leitung 100 noch nicht von dem Fluid durchströmt wird oder mit diesem gefüllt ist.

Wie bereits erwähnt, ist bei der in Fig. 3 gezeigten ersten Variante zwischen den beiden ersten Ultraschallwandlern 11, 12 und zwischen den beiden zweiten Ultraschallwandlern 21, 22 jeweils ein Dämpfungselement 6 vorgesehen. Die beiden Dämpfungselemente 6 sind in dem ersten Gehäuseteil 41 bzw. in dem zweiten Gehäuseteil 42 angeordnet. Die beiden Dämpfungselemente 6 bestehen aus einem oder umfassen ein Material, dass zumindest eine sehr starke Ultraschalldämpfung aufweist oder sogar den Durchgang von Ultraschallwellen - zumindest näherungsweise - blockiert.

Die Funktion der Dämpfungselemente 6 ist es, einen direkten Austausch von Ultraschallsignalen - also einen Austausch ohne Reflexion - zwischen den beiden ersten Ultraschallwandlern 11 und 12 bzw. zwischen den beiden zweiten Ultraschallwandlern 21 und 22 zu unterdrücken. Dies ist insbesondere im Hinblick auf die Bestimmung der Leitungsgrösse vorteilhaft (aber nicht zwingend notwendig), weil dann das Charakterisierungssignal 61 oder 62 nur über eine einfache oder mehrfache Reflexion in der Wandung 101 der Leitung 100 zwischen den beiden ersten Ultraschallwandlern 11 und 12 bzw. zwischen den beiden zweiten Ultraschallwandlern 21 und 22 ausgetauscht werden kann.

Es ist natürlich auch möglich, nur zwischen den beiden ersten Ultraschallwandlern 11 und 12, oder alternativ nur zwischen den beiden zweiten Ultraschallwandlern 21 und 22 ein Dämpfungselement 6 vorzusehen.

Fig. 4 zeigt eine zweite Variante des ersten Ausführungsbeispiels. Aus Gründen der besseren Übersicht sind in Fig. 4 die Kontrollvorrichtung 10 mit der Auswerteeinheit 20 und die Signalleitungen 11a, 12a, 21a, 22a nicht nochmals dargestellt. Es versteht sich, dass die anhand von Fig. 2 und Fig. 3 durchgeführten Erläuterungen auch für die in Fig. 4 dargestellte zweite Variante gelten. Bei dieser zweiten Variante ist in dem Gehäuse 4 der Ultraschall-Messvorrichtung 1 ferner ein Temperatursensor 5 zum Bestimmen der Temperatur des Fluids vorgesehen. Der Temperatursensor 5 ist dabei so angeordnet, dass er im geschlossenen Zustand des Gehäuses 4 in gutem Wärmekontakt mit der Leitung 100 ist, und vorzugsweise so, dass der Temperatursensor 5 in körperlichem Kontakt mit der in die zentrale Ausnehmung 3 eingelegte Leitung 100 steht. Der Temperatursensor 5 kann im ersten Gehäuseteil 41 beispielsweise zwischen den beiden ersten Ultraschallwandlern 11, 12 angeordnet sein, so wie dies in Fig. 4 dargestellt ist. Natürlich ist es auch möglich, den Temperatursensor 5 in dem zweiten Gehäuseteil 42 anzuordnen. Auch ist es nicht zwingend, den Temperatursensor 5 zwischen zwei der Ultraschallwandler 11, 12 bzw. 21, 22 anzuordnen. Wesentlich ist lediglich, dass der Temperatursensor 5 im Wärmekontakt mit dem Fluid steht, wenn dieses die Leitung 100 durchströmt.

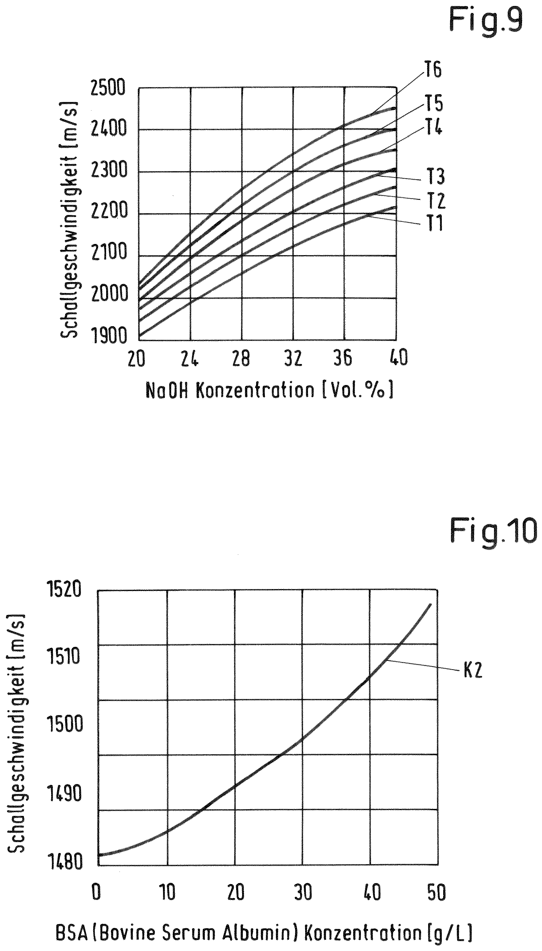

Durch den Temperatursensor 5 ist es möglich, eine weitere Kenngrösse des Fluids zu ermitteln, nämlich eine solche, die repräsentativ für die Temperatur des Fluid in der Leitung 100 ist. Hierdurch ist es möglich, thermische Effekte zu kompensieren, welche die Ultraschallmessungen beeinflussen können. Ferner ist der Temperatursensor 5 insbesondere dann vorteilhaft, wenn als Kenngrösse eine solche Grösse ermittelt wird, deren Abhängigkeit von der Schallgeschwindigkeit und/oder von der Schalldämpfung von der Temperatur abhängt. Hierfür wird weiter hinten anhand von Fig. 9 noch ein Beispiel erläutert.

Alternativ oder ergänzend ist es auch möglich, den Temperatursensor 5 ausserhalb des Gehäuses 4 der Ultraschall-Messvorrichtung 1 vorzusehen. Der Temperatursensor 5 zur Erfassung der Temperatur des Fluids kann also insbesondere auch ausserhalb des Gehäuses 4, beispielsweise als separater bzw. externer Temperatursensor 5, angeordnet sein, welcher mit der Auswerteeinheit 20 signalverbunden ist.

Es versteht sich, dass die erste Variante auch mit der zweiten Variante kombinierbar ist, das heisst die Ultraschall-Messvorrichtung 100 kann sowohl das Dämpfungselement 6 oder die Dämpfungselemente 6 umfassen als auch mindestens einen Temperatursensor 5.

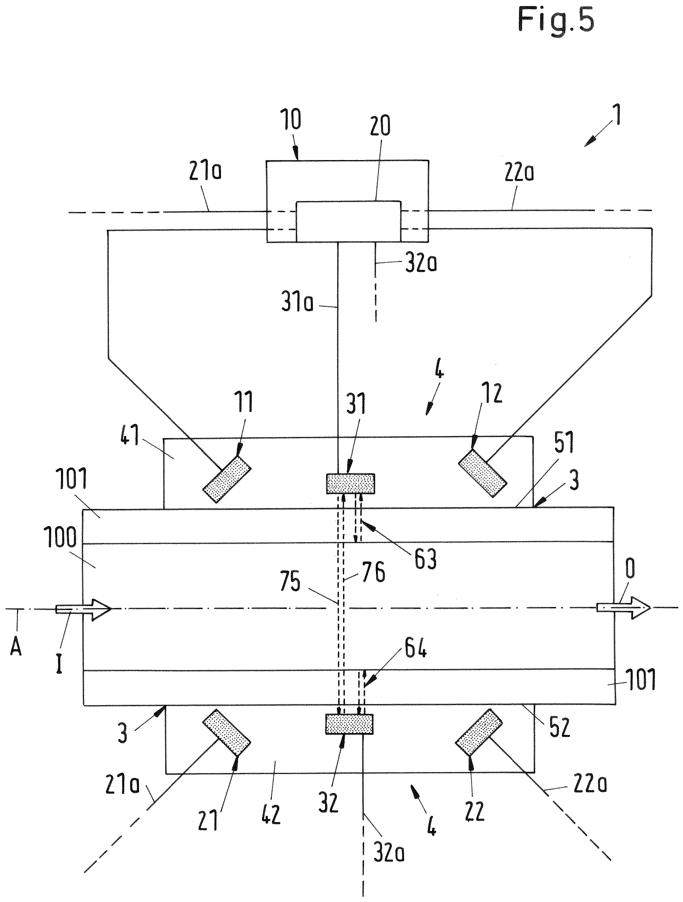

Fig. 5 zeigt in einer schematischen Darstellung ein zweites Ausführungsbeispiel einer erfindungsgemässen Ultraschall-Messvorrichtung 1 in einer zu Fig. 2 analogen Darstellung. Bei der folgenden Beschreibung des zweiten Ausführungsbeispiels wird nur auf die Unterschiede zu dem ersten Ausführungsbeispiel näher eingegangen. Ansonsten gelten die Erläuterungen des ersten Ausführungsbeispiels bzw. seiner Varianten in gleicher Weise oder in sinngemäss gleicher Weise auch für das zweite Ausführungsbeispiel. Bei dem zweiten Ausführungsbeispiel sind gleiche Teile oder von der Funktion her gleichwertige Teile mit den gleichen Bezugszeichen bezeichnet wie bei dem ersten Ausführungsbeispiel bzw. seinen Varianten. Es versteht sich, dass die in Fig. 3 und Fig. 4 dargestellte erste und zweite Variante auch mit dem zweiten Ausführungsbeispiel kombiniert werden können.

Aus Gründen der besseren Übersicht sind in Fig. 5 die ersten Messsignale 81,82 sowie die zweiten Messsignale 91,92 nicht nochmals dargestellt.

Bei dem zweiten Ausführungsbeispiel umfasst die Ultraschall-Messvorrichtung 1 insgesamt sechs Ultraschallwandler, nämlich die beiden ersten Ultraschallwandler 11, 12, die beiden zweiten Ultraschallwandler 21, 22, sowie zwei Eichwandler 31, 32 zum jeweiligen Aussenden und Empfangen von Ultraschallsignalen.

Die Eichwandler 31, 32 können jeweils in gleicher Weise ausgestaltet sein wie die anderen Ultraschallwandler 11,21,21,23. Die Bezeichnung "Eichwandler" dient der sprachlichen Unterscheidung von den ersten und zweiten Ultraschallwandlern 11,12 bzw. 21,22.

In jeder der beiden Gehäuseteile 41, 42 ist jeweils einer der beiden Eichwandler 31, 32 vorgesehen. Im geschlossenen Zustand des Gehäuses 4 ist der Eichwandler 31 auf der ersten Seite 51 der zentralen Ausnehmung 3 angeordnet, und der zweite Eichwandler 32 ist auf der zweiten Seite 52 der zentralen Ausnehmung 3 angeordnet. Dabei sind die beiden Eichwandler 31, 32 so angeordnet, dass sie sich gegenüberliegen und spiegelsymmetrisch bezüglich der Strömungsrichtung A angeordnet sind. Jeder der beiden Eichwandler 31, 32 ist jeweils zum Aussenden eines Ultraschallsignals senkrecht zur Strömungsrichtung A angeordnet. Vorzugsweise sind beide Eichwandler 31, 32 jeweils so angeordnet, dass ihre jeweilige Sende-und Empfangsfläche parallel zur Strömungsrichtung A ist, und somit die Hauptausbreitungsrichtung der von den Eichwandlern 31, 32 ausgesendeten Ultraschallsignale jeweils senkrecht auf der Strömungsrichtung A steht.

Bei der in Fig. 5 dargestellten Ausführung ist der Eichwandler 31 zwischen den beiden ersten Ultraschallwandlern 11 und 12 angeordnet, vorzugsweise mittig, und der Eichwandler 32 ist zwischen den beiden zweiten Ultraschallwandlern 21 und 22 angeordnet, vorzugsweise mittig. Diese Anordnung ist zwar bevorzugt aber nicht zwingend. Es ist beispielsweise auch möglich, die beiden Eichwandler 31, 32 darstellungsgemäss (Fig. 5) rechts der Ultraschallwandler 12 und 22 oder links der Ultraschallwandler 11 und 21 anzuordnen, also ausserhalb des Zwischenraums zwischen den beiden ersten Ultraschallwandlern 11,12 bzw. zwischen den beiden zweiten Ultraschallwandlern 21,22.

Jeder der beiden Eichwandler 31, 32 ist über eine jeweilige Signalleitung 31a bzw. 32a mit der Auswerteeinheit 20 bzw. mit der Kontrolleinrichtung 10 signalverbunden.

Die beiden Eichwandler 31, 32 dienen dazu, ein Ultraschallsignal senkrecht zur Strömungsrichtung A auszusenden und zu empfangen. Die beiden Eichwandler dienen somit dazu, eine von der Strömungsgeschwindigkeit des Fluids in der Leitung 100 unabhängige Kenngrösse des Fluids zu ermitteln. Zudem ist es möglich, mittels der Eichwandler 31, 32 eine Leitungsgrösse zu bestimmen.

Hinsichtlich der Bestimmung der Kenngrösse dienen die beiden Eichwandler dazu, dritte Messsignale 75, 76 auszusenden und zu empfangen, welche senkrecht zur Strömungsrichtung A fortschreiten. Das heisst, die dritten Messsignale 71,72,73,74, welche bei dem ersten Ausführungsbeispiel von den ersten Ultraschallwandlern 11,12 und den zweiten Ultraschallwandlern 21,22 generiert werden, werden bei dem zweiten Ausführungsbeispiel durch die separaten Eichwandler 31, 32 erzeugt. Der Eichwandler 31 sendet das dritte Messsignal 75, welches von dem Eichwandler 32 nach Durchlaufen des Fluids empfangen wird, und der Eichwandler 32 sendet das dritte Messsignal 76, welches von dem Eichwandler 31 nach Durchlaufen des Fluids empfangen wird. Mit diesen beiden dritten Messsignalen 75,76 lässt sich dann in analoger Weise eine von der Strömungsgeschwindigkeit des Fluids unabhängige Kenngrösse des Fluids ermitteln, wie dies vorangehend anhand der dritten Messsignale 71,72,73,74 erläutert ist.

Auch die von den Eichwandlern 31, 32 empfangenen dritten Messsignale 76, 75 können bezüglich ihrer Laufzeit, oder bezüglich ihrer Dämpfung oder bezüglich ihrer Laufzeit und ihrer Dämpfung analysiert werden.

Ferner kann mittels der Eichsensoren 31, 32 auch eine Leitungsgrösse ermittelt werden. Hierzu sendet der Eichwandler 31 ein Charakterisierungssignal 63 senkrecht zur Strömungsrichtung A aus. Dieses Charakterisierungssignal 63 wird dann - teilweise - von der Leitung 100 an der Grenzfläche zwischen der Wandung 101 und dem Inneren der Leitung 100 reflektiert und das daraus resultierende Echosignal wird von dem gleichen Eichwandler 31 empfangen, der auch das Charakterisierungssignal 63 ausgesendet hat.

Alternativ oder ergänzend kann auch der andere Eichwandler 32 zur Ermittlung der Leitungsgrösse verwendet werden. Hierzu sendet der Eichwandler 32 ein Charakterisierungssignal 64 senkrecht zur Strömungsrichtung A aus. Dieses Charakterisierungssignal 64 wird dann - teilweise - von der Leitung 100 an der Grenzfläche zwischen der Wandung 101 und dem Inneren der Leitung 100 reflektiert und das daraus resultierende Echosignal wird von dem gleichen Eichwandler 32 empfangen, der auch das Charakterisierungssignal 64 ausgesendet hat.

In sinngemäss gleicher Weise wie anhand des ersten Ausführungsbeispiels beschrieben, werden die empfangenen Charakterisierungssignale 63 und/oder 64 an die Auswerteeinheit 20 übermittelt, um die Leitungsgrösse zu bestimmen.

Abweichend von der Darstellung in Fig. 5 ist es auch möglich, nur einen der beiden Eichsensoren 31, 32 vorzusehen, also entweder den ersten Eichsensor 31 oder den zweiten Eichsensor 32. Bei einer solchen Ausgestaltung weist die Ultraschall-Messvorrichtung dann fünf Ultraschallsensoren auf, nämlich die beiden ersten Ultraschallwandler 11,12, die beiden zweiten Ultraschallwandler 21, 22, sowie nur einen der Eichwandler entweder 31 oder 32.

Im Hinblick auf eine besonders hohe Genauigkeit und Zuverlässigkeit der Messung ist es - sowohl für das erste Ausführungsbeispiels als auch für das zweite Ausführungsbeispiel - eine bevorzugte Massnahme, wenn mit mindestens einem Ultraschallwandler 11, 12, 21, 22, 31, 32 ein kontinuierliches Ultraschallsignal ausgesendet wird. In einer bevorzugten Ausführungsform werden zum Bestimmen des Durchflusses des Fluids durch die Leitung 100 entweder die beiden ersten Ultraschallwandler 11, 12 zum jeweiligen Aussenden eines kontinuierlichen Ultraschallsignals angeregt, nämlich eines ersten Messsignals 81 (siehe Fig. 2) schräg und in Strömungsrichtung A, sowie ein ersten Messsignal 82 schräg und gegen die Strömungsrichtung, wobei diese ersten Messsignale 81, 82 von den zweiten Ultraschallwandlern 22 und 21 empfangen werden, oder es werden die beiden zweiten Ultraschallwandler 21, 22 zum jeweiligen Aussenden eines kontinuierlichen Ultraschallsignals angeregt, nämlich eines zweiten Messsignals 91 (siehe Fig. 2) schräg und in Strömungsrichtung A, sowie eines zweiten Messsignal 92 schräg und gegen die Strömungsrichtung A, wobei diese zweiten Messsignale 91, 92 von den ersten Ultraschallwandlern 12 und 11 empfangen werden.

Natürlich ist es auch möglich, beispielsweise zur Ermittlung einer Kenngrösse, welche von der Strömungsgeschwindigkeit des Fluids unabhängig ist, mit einem der beiden Eichwandler 31 oder 32 ein kontinuierliches Ultraschallsignal als drittes Messsignal 75 oder 76 senkrecht zur Strömungsrichtung A auszusenden und dieses dritte Messsignal 75 oder 76 mit dem anderen Eichwandler 32 oder 31 zu empfangen.

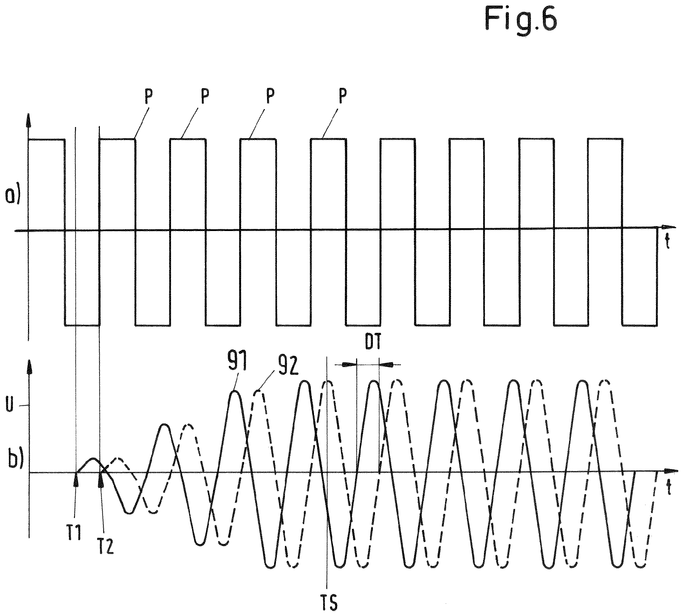

Mit dem Begriff "kontinuierliches" Ultraschallsignal ist ein solches Ultraschallsignal gemeint, bei welchem die Amplitude des Signals über einen Zeitraum im Wesentlichen konstant ist, welcher deutlich grösser ist als die Einschwingzeit oder die Abklingzeit des Signals, also ein transienter Anteil des Signals. Die Amplitude des Signals wird als "im Wesentlichen" konstant über einen Zeitraum bezeichnet, wenn die Änderung der Amplitude des Signals in diesem Zeitraum höchstens 7%, insbesondere höchstens 5%, bevorzugt höchstens 3% und besonders bevorzugt höchstens 1% beträgt. Dies wird im Folgenden anhand von Fig. 6 noch näher erläutert.

Fig. 6 zeigt in der Darstellung b) den zeitlichen Verlauf zweier kontinuierlicher Ultraschallsignale, wobei auf der Abszisse die Amplitude U des jeweiligen Ultraschallsignals aufgetragen ist, und auf der Ordinate die Zeit t. Beide dargestellten Signale sind jeweils ein Signal, das von einem der ersten oder zweiten Ultraschallsensoren 11,12,21,22 empfangen wird. Ohne Beschränkung der Allgemeinheit ist beispielsweise das durchgezogen dargestellte Signal das von dem ersten Ultraschallwandler 12 empfangene zweite Messsignal 91, welches von dem zweiten Ultraschallwandler 21 ausgesendet wurde, und das gestrichelt dargestellte Signal ist das von dem ersten Ultraschallwandler 11 empfangene zweite Messsignal 92, welches von dem zweiten Ultraschallwandler 22 ausgesendet wurde.

Wie dies deutlich zu erkennen ist, haben beide Messsignale 91, 92 einen transienten Anteil, der sich jeweils bis etwa zum Zeitpunkt TS erstreckt. Dies ist die Einschwingzeit des jeweiligen Messsignals 91, 92, in welcher die Amplitude des Messsignals 91, 92 deutlich zunimmt. Ab dem Zeitpunkt TS ist die Amplitude der beiden Messsignale 91, 92 zumindest im Wesentlichen zeitlich konstant. Nicht gezeigt in der Darstellung b) der Fig. 6 ist die Abklingzeit des jeweiligen Messsignals 91, 92, die sich auf der Zeitachse t rechts des dargestellten Bereichs befindet. In der Abklingzeit (also nach Beendigung des gesendeten Messsignals) nimmt die Amplitude des jeweiligen Messsignals 91, 92 mit der Zeit t ab und erreicht dann den Wert Null.

Im Rahmen dieser Anmeldung wird ein Ultraschallsignal also als "kontinuierlich" bezeichnet, wenn die Amplitude des Signals über einen Zeitraum im Wesentlichen konstant ist, der deutlich grösser ist, insbesondere mindestens doppelt so gross, vorzugsweise mindestens zehnmal so gross, wie der Zeitraum, in welchem das Signal transient ist, also beispielsweise die Einschwingzeit oder die Abklingzeit des Signals. Gemäss der Darstellung b) in Fig. 6 bedeutet dies, dass der Zeitraum links des Zeitpunkts TS deutlich kleiner ist als der Zeitraum rechts des Zeitpunkts TS, in welchem die Amplitude des jeweiligen Messsignals 91 bzw. 92 zeitlich konstant ist. Es versteht sich natürlich, dass auch ein kontinuierliches Ultraschallsignal ein zeitlich begrenztes Signal ist.

Um ein kontinuierliches Ultraschallsignal auszusenden, beispielsweise mit den beiden zweiten Ultraschallwandlern 21 und 22, ist es möglich, den jeweiligen Ultraschallwandler 21 oder 22 mit einem kontinuierlichen elektrischen Signal geeigneter Frequenz anzuregen, wobei die Länge des anregenden Signals so gewählt wird, dass es der gewünschten Länge des Ultraschallsignals entspricht.

Eine andere Möglichkeit, ein kontinuierliches Ultraschallsignal zu erzeugen, besteht darin, eine Folge von diskreten Impulsen zu generieren, wobei der zeitliche Abstand zwischen zwei Impulsen kleiner ist als die Abklingzeit eines Impulses. Dies ist in der Darstellung a) der Fig. 6 veranschaulicht.

Wie bereits erwähnt bezieht sich Fig. 6 auf das Beispiel, dass die beiden zweiten Ultraschallwandler 21, 22 zum Senden der zweiten Messsignale 91, 92 verwendet werden, während die beiden ersten Ultraschallwandler 12 und 11 zum Empfangen der zweiten Messsignale 91, 92 verwendet werden. Die Darstellung a) in Fig. 6 veranschaulicht eine solche Folge von einzelnen oder diskreten Impulsen P, welche von den sendenden zweiten Ultraschallwandlern 21, 22 zeitgleich ausgesendet wird. Bevor ein diskreter Impuls P als Ultraschallsignal abgeklungen ist, folgt bereits der nächste diskrete Impuls P. Durch eine solche Folge von diskreten Impulsen P lässt sich ein kontinuierliches Ultraschallsignal, hier als zweites Messsignal 91, 92 generieren.

Im Folgenden wird anhand von Fig. 6 erläutert, wie mit Hilfe der ersten und zweiten Ultraschallwandler 11,12 bzw. 21, 22 die Strömungsgeschwindigkeit des Fluids in der Leitung 100 und damit der Durchfluss des Fluids durch die Leitung 100 ermittelt werden kann.

Wie bereits erwähnt, werden in dem in Fig. 6 dargestellten Beispiel die beiden zweiten Ultraschallwandler 21 und 22 als sendende Ultraschallwandler 21, 22 verwendet, wobei der zweite Ultraschallwandler 21 das zweite Messsignal 91 schräg zur Strömungsrichtung A und in Strömungsrichtung A aussendet, während der zweite Ultraschallwandler 22 das zweite Messsignal 92 schräg zur Strömungsrichtung A und entgegen der Strömungsrichtung A aussendet. Das zweite Messsignal 91 wird von dem ersten Ultraschallwandler 12 empfangen, und das zweite Messsignal 92 von dem ersten Ultraschallwandler 11.

Die Darstellung a) in Fig. 6 zeigt die Impulse P, mit denen das kontinuierliche Ultraschallsignal generiert wird, das zeitgleich als zweites Messsignal 91 bzw. 92 von dem zweiten Ultraschallwandler 21 und von dem zweiten Ultraschallwandler 22 ausgesendet wird.

Die Darstellung b) in Fig. 6 zeigt auf der gleichen Zeitachse t wie Darstellung a) das von dem ersten Ultraschallwandler 12 empfangene zweite Messsignal 91 (durchgezogene Linie) und das von dem ersten Ultraschallwandler 11 empfangene zweite Messsignal 92 (gestrichelte Linie).

Zum Zeitpunkt T1 erreicht das zweite Messsignal 91, welches mit der Strömungsrichtung A, läuft, den ersten Ultraschallwandler 12, und zum späteren Zeitpunkt T2 erreicht das zweite Messsignal 92, welches gegen die Strömungsrichtung A läuft, den ersten Ultraschallwandler 11. Die Laufzeitdifferenz T2-T1 hängt dabei von der Strömungsgeschwindigkeit des Fluids in der Leitung 100 ab, und kann insbesondere proportional zur Strömungsgeschwindigkeit sein. Vorzugsweise wird nun derjenige Teil der zweiten Messsignale 91, 92 ausgewertet, welcher sich zeitlich rechts vom Zeitpunkt TS befindet, also in dem Bereich, in welchem die zweiten Messsignale 91, 92 eine konstante Amplitude haben. Aus der in diesem Bereich stabilen Laufzeitdifferenz DT zwischen den beiden zweiten Messsignalen 91, 92, lässt sich dann die Strömungsgeschwindigkeit des Fluids und damit der Durchfluss des Fluids durch die Leitung 100 besonders genau ermitteln.

Die Verwendung der kontinuierlichen Ultraschallsignale als Messsignale 91, 92 hat insbesondere auch den Vorteil, dass die Auswertung transienter Signalanteile vermieden werden kann. Zudem ist das simultane Senden und Empfangen der Messsignale 91, 92 deutlich weniger empfindlich für Störgrössen, wie beispielsweise Turbulenzen im Fluid oder Temperaturschwankungen. Die Auswertung im Bereich der Messsignale 91, 92, wo deren Amplitude zumindest im Wesentlichen konstant ist, ermöglicht auch eine höhere Genauigkeit der Messung, weil hier zwei sinusförmige Signale konstanter Phasenbeziehung ausgewertet werden.

Die Anzahl der diskreten Impulse P, die zur Erzeugung des kontinuierlichen Ultraschallsignals verwendet wird, hängt vom Anwendungsfall ab und wird so festgelegt, dass das gesendete oder das empfangene Ultraschallsignal einen vorgebbaren Bereich konstanter Amplitude bzw. einen Bereich einer stabilen Signalphase aufweist. Für viele Anwendungen ist eine Anzahl von mindestens zwanzig diskreten Impulsen P vorteilhaft, um ein Ultraschallsignal mit einer über einen ausreichenden Zeitraum konstanten Amplitude zu generieren.

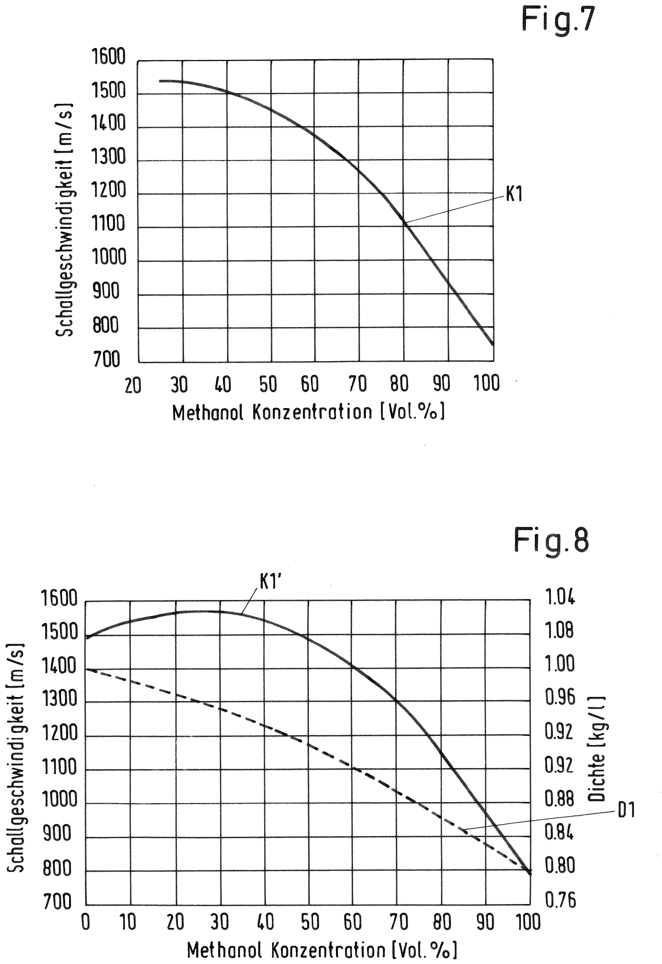

Im Folgenden werden anhand der Fig. 7-13 noch einige Beispiele für Kenngrössen des Fluids erläutert, welche sich mittels der erfindungsgemässen Ultraschall-Messvorrichtung 1 bzw. mittels des erfindungsgemässen Verfahrens ermitteln lassen. Hierbei kann es sich insbesondere auch um Fluide handeln, welche in pharmazeutischen oder biotechnologischen Prozessen verwendet werden, beispielsweise um Zellsuspensionen, proteinhaltige Fluide oder Fluide mit organischen Komponenten. Es können auch Fluide sein, die üblicherweise in der Halbleiterindustrie verwendet werden, beispielsweise die als Slurry bezeichneten Suspensionen von Siliziumdioxid in Wasser oder ähnliches.

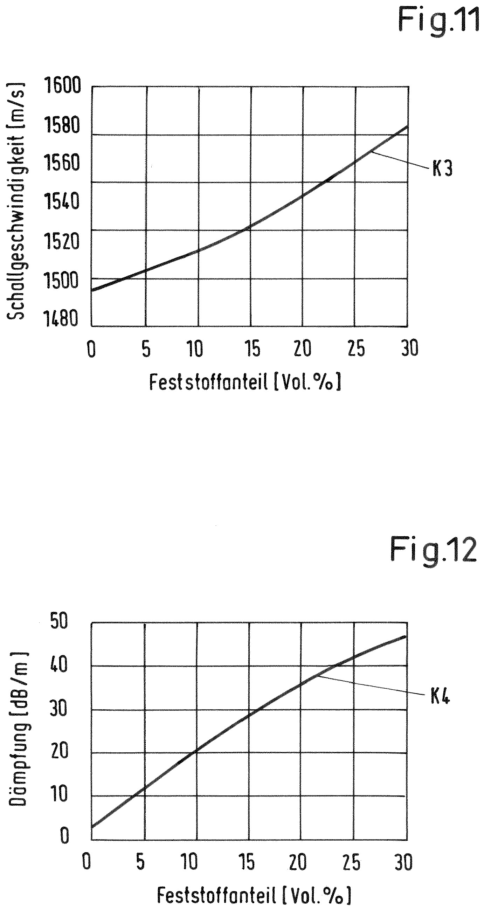

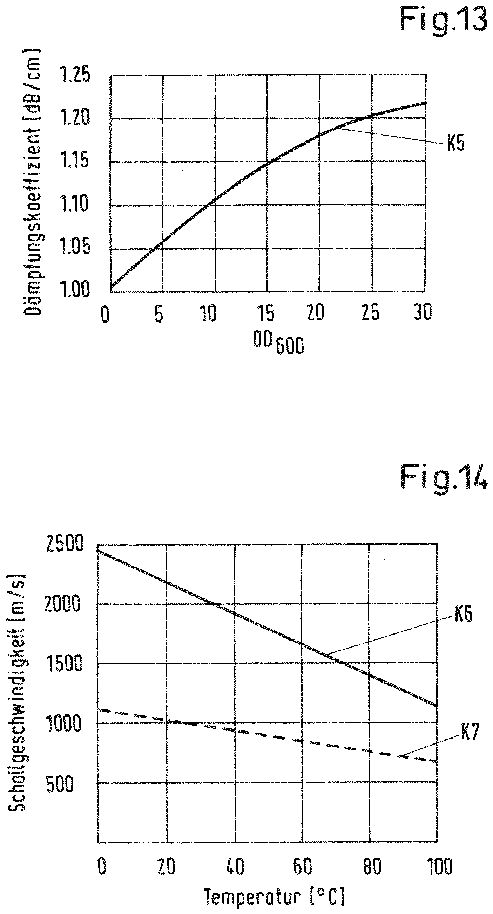

Vorangehend ist bereits erläutert worden, wie der Durchfluss des Fluids als Kenngrösse ermittelt werden kann. Im Folgenden wird beispielhaft auf solche Kenngrössen des Fluids Bezug genommen, welche von der Strömungsgeschwindigkeit des Fluids in der Leitung 100 unabhängig sind. Dies sind Kenngrössen des Fluids, die von der Schallgeschwindigkeit oder der Schalldämpfung in dem Fluid abhängig sind. Die Fig. 7 -11 zeigen Diagramme, die sich jeweils auf die Ermittlung der Schallgeschwindigkeit in dem Fluid mittels einer Laufzeitmessung eines dritten Messsignals beziehen, während sich die Fig. 12 und 13 auf die Messung der Dämpfung eines Ultraschallsignals beziehen.

Zur Ermittlung solcher Kenngrössen des Fluids, welche nicht von der Strömungsgeschwindigkeit in der Leitung 100 abhängen, werden vorzugsweise eines oder mehrere der dritten Messsignale 71,72,73,74,75,76 verwendet bzw. ausgewertet, also solche Messsignale, welche senkrecht zur Strömungsrichtung A fortschreiten. Dabei ist es sowohl möglich, eines oder mehrere der dritten Messsignale 71,72,73,74 zu verwenden und auszuwerten, welche von den ersten oder zweiten Ultraschallwandlern 11,12,21,22 generiert werden, als auch solche dritten Messsignale 75,76, welche von den Eichwandler 31 oder 32 generiert werden, oder falls nur ein Eichwandler 31 oder 32 vorgesehen ist, von diesem Eichwandler 31 oder 32 generiert wird. Alternativ ist es auch möglich, anstelle der Differenz, die Summe der Laufzeiten zwischen den Ultraschallwandlern 11 und 22 beziehungsweise den Ultraschallwandlern 12 und 21 auszuwerten. Wenn nämlich jeweils ein Signal in die Flussrichtung und eines entgegen der Flussrichtung ausgestrahlt wird, heben sich die von der Flussgeschwindigkeit abhängigen Komponenten der beiden Laufzeiten gegenseitig auf. Die Summe der beiden Laufzeiten ist dann im Wesentlichen von der Schallgeschwindigkeit in der Flüssigkeit beziehungsweise im Schlauchmaterial abhängig.

Bei dem Diagramm in Fig. 7 ist die Kenngrösse die Methanol Konzentration in dem Fluid, beispielsweise in Wasser. Die Methanol Konzentration ist dabei in Volumenprozent angegeben. Fig. 7 zeigt mit der Kurve K1 den Zusammenhang zwischen der Schallgeschwindigkeit in dem Fluid in Meter pro Sekunde (m/s) und der Methanol Konzentration in dem Fluid für einen Konzentrationsbereich von etwa 20 Vol% (Volumenprozent) bis 100 Vol%. In diesem Konzentrationsbereich ist der Zusammenhang eineindeutig, das heisst, aus der Ermittlung der Schallgeschwindigkeit kann eindeutig die Methanol Konzentration in dem Fluid als Kenngrösse ermittelt werden.

Fig. 8 ist ähnlich wie Fig. 7 allerdings ist hier der Zusammenhang zwischen der Methanol Konzentration in dem Fluid und der Schallgeschwindigkeit in dem Fluid durch die Kurve K1' für den gesamten Konzentrationsbereich von 0 Vol% bis 100 Vol% dargestellt. Da diese Kurve K1' ein Maximum hat, lässt sich manchen Schallgeschwindigkeiten, nämlich solchen unterhalb einer Konzentration von etwa 50 Vol% nicht mehr eindeutig ein Wert der Methanol Konzentration zuordnen, weil hier zu jeder Schallgeschwindigkeit zwei verschiedene Werte der Konzentration gehören. Wenn nun eine weitere Kenngrösse des Fluids bekannt ist, oder messtechnisch ermittelt wird, lässt sich dennoch aus der ermittelten Schallgeschwindigkeit eindeutig die Methanol Konzentration in dem Fluid ableiten. Wird beispielsweise die Dichte des Fluids zusätzlich messtechnisch ermittelt oder falls diese bekannt ist, kann aus der Abhängigkeit der Dichte von der Methanol Konzentration, die in Fig. 8 durch die Kurve D1 wiedergegeben ist und dem ermittelten Wert der Schallgeschwindigkeit eindeutig die Methanol Konzentration in dem Fluid bestimmt werden. Auf der darstellungsgemäss rechten Abszisse ist in Fig. 8 die Dichte in Kilogramm pro Liter (kg/l) angegeben

Bei dem Diagramm in Fig. 9 ist die Kenngrösse die Natriumhydroxid (NaOH) Konzentration in dem Fluid, beispielsweise in Wasser. Die NaOH Konzentration ist dabei in Volumenprozent angegeben. Der Zusammenhang zwischen der NaOH Konzentration in dem Fluid und der Schallgeschwindigkeit in dem Fluid ist auch von der Temperatur des Fluids abhängig. Fig. 9 zeigt eine Kurvenschar mit den Kurven T1-T6, welche jeweils den Zusammenhang zwischen der Schallgeschwindigkeit in dem Fluid und der NaOH Konzentration in dem Fluid für einen Konzentrationsbereich von etwa 20 Vol% bis etwa 40 Vol% bei einer bestimmten Temperatur angeben. Die Kurve T1 gibt den Zusammenhang für 0°C an, die Kurve T2 den Zusammenhang für 20°C, die Kurve T3 den Zusammenhang für 40°C, die Kurve T4 den Zusammenhang für 60°C, die Kurve T5 den Zusammenhang für 80°C und die Kurve T6 den Zusammenhang für 100°C. Ist die Temperatur des Fluids bekannt, so ist der Zusammenhang zwischen der NaOH Konzentration und der Schallgeschwindigkeit eineindeutig, das heisst, aus der Ermittlung der Schallgeschwindigkeit kann bei bekannter Temperatur eindeutig die NaOH Konzentration in dem Fluid für diese Temperatur als Kenngrösse ermittelt werden. Die Temperatur des Fluids kann beispielsweise mit dem Temperatursensor 5 (siehe Fig. 4) bestimmt werden.

Bei dem Diagramm in Fig. 10 ist die Kenngrösse die Rinderserumalbumin (BSA: bovine serum albumin) Konzentration in dem Fluid Wasser. Die BSA Konzentration ist dabei in Gramm pro Liter (g/L) angegeben. Fig. 10 zeigt mit der Kurve K2 den Zusammenhang zwischen der Schallgeschwindigkeit in dem Fluid, das aus Wasser und BSA besteht, und der BSA Konzentration in dem Fluid für einen Konzentrationsbereich von 0 g/L bis etwa 50 g/L. Die Kurve K2 gibt dabei als Beispiel den Zusammenhang für eine Temperatur des Fluids von 20°C an. Dieser Zusammenhang ist eineindeutig, das heisst, aus der Ermittlung der Schallgeschwindigkeit kann eindeutig die BSA Konzentration in dem Fluid als Kenngrösse ermittelt werden.

Fig. 11 bezieht sich auf ein Beispiel aus der Halbleiterfertigung. Bei dem Diagramm in Fig. 11 ist die Kenngrösse der Feststoffanteil in einer Suspension von Siliziumdioxid SiO₂, die üblicherweise auch als Slurry bezeichnet wird. Der Feststoffanteil, also die SiO₂ Konzentration ist dabei in Volumenprozent angegeben. Fig. 11 zeigt mit der Kurve K3 den Zusammenhang zwischen der Schallgeschwindigkeit in der Slurry und dem Feststoffanteil von SiO₂ in der Slurry für einen Bereich von 0 Vol% bis 30 Vol%. Genauer gesagt gibt die Kurve K3 den Zusammenhang zwischen der Schallgeschwindigkeit und dem Feststoffgehalt in einer SiO₂ Slurry mit Partikeln von 30 Mikrometer Grösse bei einer Temperatur des Fluids von 20°C und bei einer Ultraschallfrequenz von 3MHz an. Wie dies die Kurve K3 zeigt, ist der Zusammenhang zwischen Schallgeschwindigkeit und Feststoffanteil eineindeutig, das heisst, aus der Ermittlung der Schallgeschwindigkeit kann eindeutig der Feststoffanteil in der Slurry als Kenngrösse ermittelt werden.

In den Fig. 12 und 13 werden zwei Beispiels gezeigt, bei welchen die Dämpfung des Ultraschallsignals, also beispielsweise eines dritten Messsignals 71-76, bestimmt wird, um daraus eine Kenngrösse des Fluids zu ermitteln.

Bei dem Diagramm in Fig. 12 ist die Kenngrösse wiederum der Feststoffanteil in einer Suspension von Siliziumdioxid SiO₂, also in einer Slurry. Der Feststoffanteil, also der SiO₂ Gehalt ist dabei in Volumenprozent angegeben. Fig. 12 zeigt mit der Kurve K4 den Zusammenhang zwischen der Dämpfung eines Ultraschalsignals, gemessen in Dezibel pro Meter, (dB/m) in der Slurry und dem Feststoffanteil von SiO₂ in der Slurry für einen Bereich von 0 Vol% bis 30 Vol%. Genauer gesagt gibt die Kurve K4 den Zusammenhang zwischen der akustischen Dämpfung und dem Feststoffgehalt in einer SiO₂ Slurry mit Partikeln von 30 Mikrometer Grösse bei einer Temperatur des Fluids von 20°C und bei einer Ultraschallfrequenz von 3MHz an. Wie die Kurve K4 zeigt, ist der Zusammenhang zwischen Dämpfung und Feststoffanteil eineindeutig, das heisst, aus der Ermittlung der akustischen Dämpfung des Ultraschallsignals kann eindeutig der Feststoffanteil in der Slurry als Kenngrösse des Fluids ermittelt werden.

Bei dem Diagramm in Fig. 13 ist die Kenngrösse, die aus der Dämpfung des Ultraschall-Messsignals ermittelt wird, die optische Dichte einer Zellsuspension. Das heisst, das Fluid ist eine Zellsuspension, beispielsweise eine E-Coli Zellsuspension. Häufig ist es üblich, beispielsweise in der Biotechnologie oder in der pharmazeutischen Industrie, den Zellenanteil oder die Zellenkonzentration in einem biologischen Fluid durch den OD₆₀₀-Wert zu charakterisieren, da dieser einfach messbar ist und gut mit der Zelldichte korreliert. Der OD₆₀₀-Wert gibt die optische Dichte der Suspension, also beispielsweise der Zellsuspension, bei einer Lichtwellenlänge von 600 nm an. Fig. 13 zeigt mit der Kurve K5 den Zusammenhang zwischen der Dämpfung eines Ultraschalsignals, gemessen in Dezibel pro Zentimeter (dB/cm), in einer Zellsuspension und der optischen Dichte OD₆₀₀ der Zellsuspension. Genauer gesagt gibt die Kurve K5 den Zusammenhang zwischen dem Dämpfungskoeffizienten in dB/cm und der optischen Dichte OD₆₀₀ an für eine E-Coli Zellsuspension bei einer Temperatur des Fluids von 37°C und bei einer Ultraschallfrequenz von 10 MHz. Aus der Messung der Dämpfung des Ultraschallsignals in dem Fluid kann somit anhand der Kurve K5 eindeutig der OD₆₀₀-Wert der Zellsuspension und damit indirekt die Zelldichte als Kenngrösse des Fluids ermittelt werden.

Fig. 14 veranschaulicht ein Beispiel, wie mit der erfindungsgemässen Ultraschall-Messvorrichtung 1 bzw. mit dem erfindungsgemässen Verfahren eine Leitungsgrösse der von dem Fluid durchströmten Leitung 100 ermittelt werden kann. Hierzu wird beispielsweise mittels der Charakterisierungssignale 61 oder 62 oder 63 oder 64 die Laufzeit des Charakterisierungssignals 61-64 in der Wandung 101 der Leitung 100 ermittelt. Hieraus lässt sich die Schallgeschwindigkeit des Materials ermitteln, aus welchem die vorzugsweise flexible Leitung 101 besteht. Fig. 14 zeigt mit den Kurven K6 und K7 den Zusammenhang zwischen der Schallgeschwindigkeit in der Leitung 100 und der Temperatur für zwei verschiedene Materialien. Die durchgezogene Kurve K6 zeigt die Schallgeschwindigkeit für PVC und die gestrichelte Kurve K7 zeigt die Schallgeschwindigkeit für den Silikonkautschuk RTV-602. Es ist zu erkennen dass sich die Schallgeschwindigkeiten in diesen beiden Materialien deutlich unterscheiden, sodass -selbst wenn die Temperatur nicht bekannt ist - aus einer Bestimmung der Schallgeschwindigkeit in der Wandung 101 der Leitung 100 das Material, aus dem die Leitung 100 besteht, als Leitungsgrösse ermittelt werden kann.

Da mit der erfindungsgemässen Ultraschall-Messvorrichtung 1 bzw. mit dem erfindungsgemässen Verfahren neben dem Durchfluss des Fluids durch die Leitung 100 zusätzlich eine weitere Kenngrösse des Fluids ermittelt werden kann, und insbesondere eine Kenngrösse des Fluids, die unabhängig von der jeweiligen Strömungsgeschwindigkeit des Fluids ist, eignen sich die Ultraschall-Messvorrichtung 1 und das erfindungsgemässe Verfahren insbesondere auch für die Überwachung und die Kontrolle von Prozessen, beispielsweise in der Biotechnologie, in der pharmazeutischen Industrie oder in der Halbleiterindustrie, bei denen ein Fluid durch eine vorzugsweise flexible Leitung 100 strömt. Insbesondere können Änderungen in Kenngrössen und damit in den Eigenschaften des Fluids, beispielsweise Konzentrationsänderungen oder sonstige Änderungen in der Zusammensetzung des Fluids, zuverlässig detektiert werden. Daher eignen sich die erfindungsgemässe Ultraschall-Messvorrichtung 1 und das erfindungsgemässe Verfahren insbesondere auch für Regelkreise in Prozessen mit strömenden Fluiden. Die Überwachung einer oder mehrerer Kenngrössen des Fluids ermöglicht die Erkennung von Abweichungen dieser Kenngrösse(n) von einem vorgebbaren Sollwert der jeweiligen Kenngrösse. Es können dann entsprechende Regelmassnahmen initiiert werden, um den Istwert der jeweiligen Kenngrösse auf den jeweiligen Sollwert zurückzuführen.

## Patentansprüche

1. Ultraschall-Messvorrichtung zur Messung an einem in einer Leitung strömenden Fluid, mit einem schliessbaren Gehäuse (4), welches eine durchgängige zentrale Ausnehmung (3) aufweist, die eine Längserstreckung hat, welche eine Strömungsrichtung (A) festlegt, wobei das Gehäuse (4) derart zur lösbaren Befestigung an der Leitung (100) ausgestaltet ist, dass im geschlossenen Zustand des Gehäuses (4) die zentrale Ausnehmung (3) die Leitung (100) aufnehmen und bezüglich des Gehäuses (4) fixieren kann, sodass das Fluid die zentrale Ausnehmung (3) in der Strömungsrichtung (A) durchströmen kann, wobei im Gehäuse (4) ferner mindestens vier Ultraschallwandler (11, 12, 21, 22, 31, 32) zum jeweiligen Aussenden und Empfangen von Ultraschallsignalen vorgesehen sind, nämlich mindestens zwei erste Ultraschallwandler (11, 12), welche im geschlossenen Zustand des Gehäuses (4) lateral auf einer ersten Seite (51) der zentralen Ausnehmung (3) angeordnet sind, und mindestens zwei zweite Ultraschallwandler (21, 22), welche im geschlossenen Zustand des Gehäuses (4) lateral auf einer zweiten Seite (52) der zentralen Ausnehmung (3) angeordnet sind, wobei die zweite Seite (52) der ersten Seite (51) gegenüberliegt, sodass sich die Ausnehmung (3) zwischen den ersten (11, 12) und den zweiten Ultraschallwandlern (21, 22) befindet, wobei die Ultraschallwandler (11, 12, 21, 22) derart angeordnet und ausgerichtet sind, dass jeweils ein erster Ultraschallwandler (11, 12) ein erstes Messsignal (81, 82) schräg zur Strömungsrichtung (A) an einen der zweiten Ultraschallwandler (21, 22) aussenden kann, und ein von diesem zweiten Ultraschallwandler (21, 22) schräg zur Strömungsrichtung (A) ausgesendetes zweites Messsignal (91, 92) empfangen kann, **dadurch gekennzeichnet, dass** mindestens ein Ultraschallwandler (11, 12, 21, 22, 31, 32) vorgesehen ist, welcher so ausgerichtet und angeordnet ist, dass er ein senkrecht zur Strömungsrichtung (A) fortschreitendes Messsignal (71, 72, 73, 74, 75, 76) empfangen kann, und dass die Ultraschall-Messvorrichtung als Klemmvorrichtung für eine Klemmverbindung mit der Leitung (100) ausgestaltet ist, mit einem ersten Gehäuseteil (41), welche die erste Seite (51) umfasst, und mit einem zweiten Gehäuseteil (42), welches die zweite Seite (52) umfasst, wobei das erste Gehäuseteil (41) und das zweite Gehäuseteil (42) gelenkig miteinander verbunden sind.

2. Ultraschall-Messvorrichtung nach Anspruch 1, wobei die vier Ultraschallwandler (11, 12, 21, 22) im geschlossenen Zustand des Gehäuses (4) kreuzförmig angeordnet sind, sodass jeweils einer der ersten Ultraschallwandler (11, 12) auf der ersten Seite (51) einem der zweiten Ultraschallwandler (21,22) auf der zweiten Seite (52) gegenüberliegt.

3. Ultraschall-Messvorrichtung nach einem der vorangehenden Ansprüche, wobei zwischen den beiden ersten Ultraschallwandlern (11, 12) und/oder zwischen den beiden zweiten Ultraschallwandlern (21, 22) ein Dämpfungselement (6) vorgesehen ist, mit welchem ein direkter Austausch von Ultraschallsignalen zwischen den beiden ersten Ultraschallwandlern (11, 12) und/oder zwischen den beiden zweiten Ultraschallwandlern (21, 22) unterdrückt wird.

4. Ultraschall-Messvorrichtung nach einem der vorangehenden Ansprüche mit sechs Ultraschallwandlern (11, 12, 21, 22, 31, 32), nämlich den beiden ersten Ultraschallwandlern (11, 12), den beiden zweiten Ultraschallwandlern (21, 22), sowie zwei Eichwandlern (31, 32) zum jeweiligen Aussenden und Empfangen von Ultraschallsignalen, wobei im geschlossenen Zustand des Gehäuses (4) auf der ersten Seite (51) und auf der zweiten Seite (52) jeweils einer der Eichwandler (31, 32) angeordnet ist, wobei die beiden Eichwandler (31, 32) sich gegenüberliegen, und wobei die beiden Eichwandler (31, 32) jeweils zum Aussenden eines Ultraschallsignals senkrecht zur Strömungsrichtung (A) angeordnet und ausgerichtet sind.

5. Ultraschall-Messvorrichtung nach einem der vorangehenden Ansprüche, welche ferner einen Temperatursensor (5) zum Bestimmen der Temperatur des Fluids umfasst.

6. Ultraschall-Messvorrichtung nach einem der vorangehenden Ansprüche, bei welcher die zentrale Ausnehmung (3) im geschlossenen Zustand des Gehäuses (4) senkrecht zur Strömungsrichtung (A) einen im Wesentlichen rechteckigen, vorzugsweise quadratischen, Querschnitt aufweist.

7. Verfahren zur Ultraschallmessung an einem in einer Leitung strömenden Fluid mit einer Ultraschall-Messvorrichtung, welche nach einem der vorangehenden Ansprüche ausgestaltet ist, umfassend die folgenden Schritte:
a) Befestigen des Gehäuses (4) der Ultraschall-Messvorrichtung (1) an der Leitung (100), derart, dass die Leitung (100) von der durchgängigen zentralen Ausnehmung (3), die eine Längserstreckung hat, welche die Strömungsrichtung (A) festlegt, aufgenommen und bezüglich des Gehäuses (4) fixiert wird;
b) Aussenden und Empfangen von Messsignalen (81, 82, 91, 92) mittels mindestens vier Ultraschallwandlern (11, 12, 21, 22), nämlich mindestens zwei ersten Ultraschallwandlern (11, 12), welche lateral auf der ersten Seite (51) der zentralen Ausnehmung (3) angeordnet sind, und mindestens zwei zweiten Ultraschallwandlern (21, 22), welche lateral auf der zweiten Seite (52) der zentralen Ausnehmung (3) angeordnet sind, wobei die zweite Seite (52) der ersten Seite (51) gegenüberliegt, sodass sich die Ausnehmung (3) mit der Leitung (100) zwischen den ersten (11, 12) und den zweiten Ultraschallwandlern (21, 22) befindet, wobei
- jeweils ein erster Ultraschallwandler (11, 12) ein erstes Messsignal (81, 82) schräg zur Strömungsrichtung an einen der zweiten Ultraschallwandler (21, 22) aussendet oder ein von diesem zweiten Ultraschallwandler (21, 22) schräg zur Strömungsrichtung (A) ausgesendetes zweites Messsignal (91, 92) empfängt,
- mit mindestens einem Ultraschallwandler (11, 12, 21, 22, 31, 32) ein senkrecht zur Strömungsrichtung (A) fortschreitendes Messsignal (71, 72, 73, 74, 75, 76) empfangen wird;
c) Übermitteln der empfangenen Messsignale an eine Auswerteeinheit (20);
d) Ermitteln mindestens einer Kenngrösse, welche von der Schallgeschwindigkeit oder der Schalldämpfung in dem Fluid abhängig ist, mit Hilfe der empfangenen Messsignale;

8. Verfahren nach Anspruch 7, wobei die Kenngrösse mittels der Laufzeit eines Messsignals, oder einer Laufzeitdifferenz zweier Messsignale oder mittels der Dämpfung eines Messsignals ermittelt wird.

9. Verfahren nach einem der Ansprüche 7-8, wobei von einem der ersten Ultraschallwandler (11, 12) oder von einem der zweiten Ultraschallwandler (21, 22) ein Charakterisierungssignal (61, 62) in Richtung der Leitung (100) ausgesendet wird, und das von der Leitung (100) reflektierte Charakterisierungssignal (61, 62) von einem der ersten Ultraschallwandler (11, 12) oder von einem der zweiten Ultraschallwandler (21, 22) empfangen wird, welcher auf derselben Seite angeordnet ist, wie der Ultraschallwandler, welcher das Charakterisierungssignal (61, 62) ausgesendet hat, und wobei mittels des empfangenen Charakterisierungssignals (61, 62) eine Leitungsgrösse ermittelt wird.

10. Verfahren nach einem der Ansprüche 7-9, wobei mittels zweier Eichwandler (31, 32), von denen einer auf der ersten Seite (51) und einer auf der zweiten Seite (52) angeordnet ist, mindestens ein Ultraschallsignal (63, 64, 75, 76) senkrecht zur Strömungsrichtung (A) ausgesendet wird, das von dem gleichen oder dem anderen Eichwandler (31, 32) empfangen wird, wobei das empfangene Signal zur Ermittlung der Leitungsgrösse und/oder zur Ermittlung der Kenngrösse herangezogen wird.

11. Verfahren nach einem der Ansprüche 7-10, wobei ferner mittels eines Temperatursensors (5) die Temperatur des Fluids ermittelt wird und zur Ermittlung mindestens einer Kenngrösse herangezogen wird.

12. Verfahren nach einem der Ansprüche 7-11, wobei mit mindestens einem Ultraschallwandler (11, 12, 21, 22, 31, 32) ein kontinuierliches Ultraschallsignal ausgesendet wird, dessen Amplitude über einen vorgebbaren Zeitraum im Wesentlichen konstant ist.

13. Verfahren nach Anspruch 12, wobei das kontinuierliche Ultraschallsignal durch eine Folge von diskreten Impulsen (P) generiert wird, wobei der zeitliche Abstand zwischen zwei Impulsen(P) kleiner ist als die Abklingzeit eines Impulses (P).

14. Verfahren nach einem der Ansprüche 8-13, wobei eine oder mehrere der folgenden Kenngrössen ermittelt wird: Durchfluss des Fluids durch die Leitung (100), Volumen- oder Massenanteil einer Komponente des Fluids, Konzentration einer in dem Fluid enthaltenen Komponente, ein Feststoffanteil in dem Fluid, Zelldichte im Fluid, optische Dichte des Fluids, Viskosität des Fluids, physikalische Dichte des Fluids, Gaskonzentration im Fluid, Änderung in der Zusammensetzung des Fluids.

## Claims

1. An ultrasonic measuring device for the measurement on a fluid flowing in a pipe, with a closable housing (4) having a continuous central recess (3), which has a longitudinal extension defining a flow direction (A), wherein the housing (4) is designed for a releasable attachment to the pipe (100) in such a way that in the closed state of the housing (4), the central recess (3) can receive the pipe (100) and can fix it with respect to the housing (4), so that the fluid can flow through the central recess (3) in the flow direction (A), wherein at least four ultrasonic transducers (11, 12, 21, 22, 31, 32) are further provided in the housing (4) for the respective emitting and receiving of ultrasonic signals, namely at least two first ultrasonic transducers (11, 12), which are arranged laterally on a first side (51) of the central recess (3) in the closed state of the housing (4), and at least two second ultrasonic transducers (21, 22), which are arranged laterally on a second side (52) of the central recess (3) in the closed state of the housing (4), wherein the second side (52) is opposed to the first side (51) so that the recess (3) is located between the first (11, 12) and the second ultrasonic transducers (21, 22), wherein the ultrasonic transducers (11, 12, 21, 22) are arranged and aligned in such a way that in each case a first ultrasonic transducer (11, 12) can emit a first measuring signal (81, 82) to one of the second ultrasonic transducers (21, 22) obliquely to the flow direction (A) and can receive a second measuring signal (91, 92) emitted by said second ultrasonic transducer (21, 22) obliquely to the flow direction (A), **characterized in that** at least one ultrasonic transducer (11, 12, 21, 22, 31, 32) is provided, which is aligned and arranged in such a way that it can receive a measuring signal (71, 72, 73, 74, 75, 76) progressing perpendicular to the flow direction (A), and **in that** the ultrasonic measuring device is designed as a clamping device for a clamping connection with the pipe (100), with a first housing part (41) comprising the first side (51) and with a second housing part (42) comprising the second side (52), wherein the first housing part (41) and the second housing part (42) are connected to each other by an articulated joint.

2. An ultrasonic measuring device according to claim 1, wherein the four ultrasonic transducers (11, 12, 21, 22) are arranged cross-shaped in the closed state of the housing (4), so that in each case one of the first ultrasonic transducers (11, 12) on the first side (51) is opposed to one of the second ultrasonic transducers (21, 22) on the second side (52).

3. An ultrasonic measuring device according to anyone of the preceding claims, wherein an attenuation element (6) is provided between the two first ultrasonic transducers (11, 12) and/or between the two second ultrasonic transducers (21, 22), with which attenuation element (6) a direct exchange of ultrasonic signals is suppressed between the two first ultrasonic transducers (11, 12) and/or between the two second ultrasonic transducers (21, 22).

4. An ultrasonic measuring device according to anyone of the preceding claims with six ultrasonic transducers (11, 12, 21, 22, 31, 32), namely the two first ultrasonic transducers (11, 12), the two second ultrasonic transducers (21, 22) and two calibration transducers (31, 32) for the respective emitting and receiving of ultrasonic signals, wherein in each case one of the calibration transducers (31, 32) is arranged on the first side (51) and on the second side (52) in the closed state of the housing (4), wherein the two calibration transducers (31, 32) are opposed to each other and wherein the two calibration transducers (31, 32) are each arranged and aligned for emitting an ultrasonic signal perpendicular to the flow direction (A).

5. An ultrasonic measuring device according to anyone of the preceding claims further comprising a temperature sensor (5) for determining the temperature of the fluid.

6. An ultrasonic measuring device according to anyone of the preceding claims, in which the central recess (3) has a substantially rectangular, preferably square, cross-section perpendicular to the flow direction (A) in the closed state of the housing (4).

7. A method for an ultrasonic measurement on a fluid flowing in a pipe with an ultrasonic measuring device, which is designed according to anyone of the preceding claims, comprising the following steps:
a) attaching the housing (4) of the ultrasonic measuring device (1) to the pipe (100) in such a way, that the pipe (100) is received by the continuous central recess (3), which has a longitudinal extension defining the flow direction (A), and is fixed with respect to the housing (4);
b) emitting and receiving measuring signals (81, 82, 91, 92) by means of at least four ultrasonic transducers (11, 12, 21, 22), namely at least two first ultrasonic transducers (11, 12), which are arranged laterally on the first side (51) of the central recess (3) and at least two second ultrasonic transducers (21, 22), which are arranged laterally on the second side (52) of the central recess (3), wherein the second side (52) is opposed to the first side (51), so that the recess (3) with the pipe (100) is located between the first (11, 12) and the second ultrasonic transducers (21, 22), wherein
- in each case a first ultrasonic transducer (11, 12) emits a first measuring signal (81, 82) to one of the second ultrasonic transducers (21, 22) obliquely to the flow direction (A) or receives a second measuring signal (91, 92) emitted by said second ultrasonic transducer (21, 22) obliquely to the flow direction (A),
- a measuring signal (71, 72, 73, 74, 75, 76) progressing perpendicular to the flow direction (A) is received by means of at least one ultrasonic transducer (11, 12, 21, 22, 31, 32);
c) transmitting the received measuring signals to an evaluation unit (20);
d) detecting at least one parameter, which depends on the speed of sound or the sound absorption in the fluid, by means of the received measuring signals;

8. A method according to claim 7, wherein the parameter is detected by means of the transit time of a measuring signal or by means of a transit time difference of two measuring signals or by means of the attenuation of a measuring signal.

9. A method according to anyone of the claims 7 to 8, wherein a characterization signal (61, 62) is emitted from one of the first ultrasonic transducers (11, 12) or from one of the second ultrasonic transducers (21, 22) in the direction of the pipe (100) and the characterization signal (61, 62) reflected by the pipe (100) is received by one of the first ultrasonic transducers (11, 12) or by one of the second ultrasonic transducers (21, 22), which is arranged on the same side as the ultrasonic transducer which emitted the characterization signal (61, 62), and wherein a pipe characteristic is detected by means of the received characterization signal (61, 62).

10. A method according to anyone of the claims 7 to 9, wherein at least one ultrasonic signal (63, 64, 75, 76) is emitted perpendicular to the flow direction (A) by means of two calibration transducers (31, 32), one of which is arranged on the first side (51) and one on the second side (52), which ultrasonic signal is received by the same or the other calibration transducer (31, 32), wherein the received signal is used to detect the pipe characteristic and/or to detect the parameter.

11. A method according to anyone of the claims 7 to 10, wherein the temperature of the fluid is further detected by means of a temperature sensor (5) and is used to detect at least one parameter.

12. A method according to anyone of the claims 7 to 11, wherein a continuous ultrasonic signal is emitted with at least one ultrasonic transducer (11, 12, 21, 22, 31, 32), the amplitude of said signal is substantially constant over a predeterminable period of time.

13. A method according to claim 12, wherein the continuous ultrasonic signal is generated by a sequence of discrete pulses (P), wherein the temporal distance between two pulses (P) is smaller than the decay time of a pulse (P).

14. A method according to anyone of the claims 8 to 13, wherein one or several of the following parameters is detected: flow rate of the fluid through the pipe (100), volume or mass fraction of a component of the fluid, concentration of a component contained in the fluid, a solids content in the fluid, cell density in the fluid, optical density of the fluid, viscosity of the fluid, physical density of the fluid, gas concentration in the fluid, change in the composition of the fluid.

## Revendications

1. Un dispositif de mesure par ultrasons pour la mesure d'un fluide s'écoulant dans un conduit, avec un boîtier (4) pouvant être fermé, présentant un évidement central continu (3), qui a une extension longitudinale définissant une direction d'écoulement (A), dans lequel le boîtier (4) est conçu pour être fixé de manière détachable au conduit (100) de telle sorte qu'à l'état fermé du boîtier (4), l'évidement central (3) peut recevoir le conduit (100) et le fixer par rapport au boîtier (4) afin que le fluide peut s'écouler à travers l'évidement central (3) dans la direction d'écoulement (A), dans lequel au moins quatre transducteurs ultrasoniques (11, 12, 21, 22, 31, 32) sont en outre prévus dans le boîtier (4) pour l'émission et la réception respectives de signaux ultrasoniques, à savoir au moins deux premiers transducteurs ultrasoniques (11, 12) qui, à l'état fermé du boîtier (4), sont disposés latéralement sur un premier côté (51) de l'évidement central (3), et au moins deux deuxièmes transducteurs ultrasoniques (21, 22) qui, à l'état fermé du boîtier (4), sont disposés latéralement sur un deuxième côté (52) de l'évidement central (3), dans lequel le deuxième côté (52) est opposé au premier côté (51) de sorte que l'évidement (3) est situé entre les premiers (11, 12) et les deuxièmes transducteurs ultrasoniques (21, 22), dans lequel les transducteurs ultrasoniques (11, 12, 21, 22) sont disposés et orientés de telle sorte que respectivement un premier transducteur ultrasonique (11, 12) peut émettre un premier signal de mesure (81, 82) obliquement par rapport à la direction d'écoulement (A) vers l'un des deuxièmes transducteurs ultrasoniques (21, 22) et peut recevoir un deuxième signal de mesure (91, 92) émis obliquement par rapport à la direction d'écoulement (A) par ce deuxième transducteur ultrasonique (21, 22), **caractérisé en ce qu'**au moins un transducteur ultrasonique (11, 12, 21, 22, 31, 32) est prévu, qui est orienté et disposé de telle sorte qu'il peut recevoir un signal de mesure (71, 72, 73, 74, 75, 76) se propageant perpendiculairement à la direction d'écoulement (A), et **en ce que** le dispositif de mesure par ultrasons est conçu comme un dispositif de serrage pour une connexion par serrage avec le conduit (100), avec une première partie de boîtier (41) qui comprend le premier côté (51) et avec une deuxième partie de boîtier (42) qui comprend le deuxième côté (52), la première partie de boîtier (41) et la deuxième partie de boîtier (42) étant reliées entre elles de manière articulée.

2. Un dispositif de mesure par ultrasons selon la revendication 1, dans lequel les quatre transducteurs ultrasoniques (11, 12, 21, 22) sont disposés en croix à l'état fermé du boîtier (4), de sorte que respectivement un des premiers transducteurs ultrasoniques (11, 12) du premier côté (51) est opposé à un des deuxièmes transducteurs ultrasoniques (21, 22) du deuxième côté (52).

3. Un dispositif de mesure par ultrasons selon l'une des revendications précédentes, dans lequel un élément d'amortissement (6) est prévu entre les deux premiers transducteurs ultrasoniques (11, 12) et/ou entre les deux deuxièmes transducteurs ultrasoniques (21, 22), avec lequel un échange direct de signaux ultrasoniques est supprimé entre les deux premiers transducteurs ultrasoniques (11, 12) et/ou entre les deux deuxièmes transducteurs ultrasoniques (21, 22).

4. Un dispositif de mesure par ultrasons selon l'une des revendications précédentes, avec six transducteurs ultrasoniques (11, 12, 21, 22, 31, 32), à savoir les deux premiers transducteurs ultrasoniques (11, 12), les deux deuxièmes transducteurs ultrasoniques (21, 22), ainsi que deux transducteurs de calibrage (31, 32) pour respectivement émettre et recevoir des signaux ultrasoniques, dans lequel à l'état fermé du boîtier (4), respectivement un des transducteurs de calibrage (31, 32) est disposé sur le premier côté (51) et sur le deuxième côté (52), dans lequel les deux transducteurs de calibrage (31, 32) sont opposés l'un à l'autre, et dans lequel les deux transducteurs de calibrage (31, 32) sont chacun disposés et alignés perpendiculairement à la direction d'écoulement (A) pour émettre un signal ultrasonique.

5. Un dispositif de mesure par ultrasons selon l'une des revendications précédentes, qui comprend en outre un capteur de température (5) pour déterminer la température du fluide.

6. Un dispositif de mesure par ultrasons selon l'une des revendications précédentes, dans lequel à l'état fermé du boîtier (4), l'évidement central (3) présente une section transversale sensiblement rectangulaire, de préférence carrée, perpendiculairement à la direction d'écoulement (A).

7. Une méthode de mesure par ultrasons sur un fluide s'écoulant dans un conduit avec un dispositif de mesure par ultrasons, qui est conçu selon l'une des revendications précédentes, comprenant les étapes suivantes :
a) Fixation du boîtier (4) du dispositif de mesure par ultrasons (1) sur le conduit (100) de telle sorte que le conduit (100) est reçue par l'évidement central continu (3), qui a une extension longitudinale définissant la direction d'écoulement (A), et qui est fixé par rapport au boîtier (4) ;
b) émettre et recevoir des signaux de mesure (81, 82, 91, 92) au moyen d'au moins quatre transducteurs ultrasoniques (11, 12, 21, 22), à savoir au moins deux premiers transducteurs ultrasoniques (11, 12), qui sont disposés latéralement sur le premier côté (51) de l'évidement central (3), et au moins deux deuxièmes transducteurs ultrasoniques (21, 22), qui sont disposés latéralement sur le deuxième côté (52) de l'évidement central (3), dans lequel le deuxième côté (52) est opposé au premier côté (51) de sorte que l'évidement (3) est situé entre les premiers (11, 12) et les deuxièmes transducteurs ultrasoniques (21, 22), dans lequel
- respectivement un premier transducteur ultrasonique (11, 12) émet un premier signal de mesure (81, 82) obliquement par rapport à la direction d'écoulement (A) vers l'un des deuxièmes transducteurs ultrasoniques (21, 22) ou reçoit un deuxième signal de mesure (91, 92) émis obliquement par rapport à la direction d'écoulement (A) par ce deuxième transducteur ultrasonique (21, 22),
- un signal de mesure (71, 72, 73, 74, 75, 76) se propageant perpendiculairement à la direction d'écoulement (A) est reçu par au moins un transducteur ultrasonique (11, 12, 21, 22, 31, 32) ;
c) Transmettre les signaux de mesure reçus à une unité d'évaluation (20) ;
d) Détermination d'au moins un paramètre, qui dépend de la vitesse du son ou de l'atténuation du son dans le fluide, à l'aide des signaux de mesure reçus ;

8. Une méthode selon la revendication 7, dans laquelle le paramètre est déterminé au moyen du temps de transit d'un signal de mesure, ou d'une différence de temps de transit entre deux signaux de mesure, ou au moyen de l'atténuation d'un signal de mesure.

9. Une méthode selon l'une des revendications 7 à 8, dans laquelle un signal de caractérisation (61, 62) est émis par l'un des premiers transducteurs ultrasoniques (11, 12) ou par l'un des deuxièmes transducteurs ultrasoniques (21, 22) dans la direction du conduit (100), et le signal de caractérisation (61, 62) réfléchi par le conduit (100) est reçu par l'un des premiers transducteurs ultrasoniques (11, 12) ou par l'un des deuxièmes transducteurs ultrasoniques (21, 22), qui est situé du même côté que le transducteur ultrasonique, qui a émis le signal de caractérisation (61, 62), et dans laquelle une grandeur du conduit est déterminée au moyen du signal de caractérisation reçu (61, 62).

10. Une méthode selon l'une des revendications 7 à 9, dans laquelle au moins un signal ultrasonique (63, 64, 75, 76) est émis perpendiculairement à la direction d'écoulement (A) au moyen de deux transducteurs de calibrage (31, 32), dont l'un est disposé sur le premier côté (51) et l'autre sur le deuxième côté (52), et est reçu par le même ou l'autre transducteur de calibrage (31, 32), dans laquelle le signal reçu est utilisé pour déterminer la grandeur du conduit et/ou pour déterminer le paramètre.

11. Une méthode selon l'une des revendications 7 à 10, dans laquelle en outre la température du fluide est déterminée au moyen d'un capteur de température (5) et est utilisée pour déterminer au moins un paramètre.

12. Une méthode selon l'une des revendications 7 à 11, dans laquelle un signal ultrasonique continu est émis par au moins un transducteur ultrasonique (11, 12, 21, 22, 31, 32), dont l'amplitude est sensiblement constante sur une période de temps prédéterminable.

13. Une méthode selon la revendication 12, dans laquelle le signal ultrasonique continu est généré par une séquence d'impulsions discrètes (P), dans laquelle l'intervalle de temps entre deux impulsions (P) est inférieur au temps de décroissance d'une impulsion (P).

14. Une méthode selon l'une des revendications 8 à 13, dans laquelle un ou plusieurs des paramètres suivants sont déterminés : débit du fluide dans le conduit (100), fraction volumique ou massique d'un composant du fluide, concentration d'un composant contenu dans le fluide, fraction solide dans le fluide, densité cellulaire dans le fluide, densité optique du fluide, viscosité du fluide, densité physique du fluide, concentration de gaz dans le fluide, changement dans la composition du fluide.
